# EUROPEAN PATENT SPECIFICATION

(11) **EP 4 529 120 B1**
(45) Date of publication and mention of the grant of the patent: **22.04.2026**
(21) Application number: 23814964.5
(22) Date of filing: 17.05.2023
(51) Int. Cl.: H04L 41/0806, H04L 41/0853, H04L 41/5041, H04L 43/0805, H04L 43/0852, H04L 43/0876, H04L 67/125, H04L 45/30, H04L 67/51, H04L 41/0803, H04L 41/12, H04L 67/10, H04L 67/1095, H04L 67/306, H04L 69/06, H04L 41/0823

(54) **COMMUNICATION METHOD BASED ON ALTO PROTOCOL, AND RELATED APPARATUS**
KOMMUNIKATIONSVERFAHREN AUF DER BASIS EINES ALTO-PROTOKOLLS UND ZUGEHÖRIGE VORRICHTUNG
PROCÉDÉ DE COMMUNICATION BASÉ SUR UN PROTOCOLE ALTO ET APPAREIL ASSOCIÉ

(30) Priority: 31.05.2022 CN 202210609674
(43) Date of publication of application: 26.03.2025
(73) Proprietor: Huawei Technologies Co., Ltd., Shenzhen, Guangdong 518129 (CN)
(72) Inventor: PENG, Shuping, Shenzhen, Guangdong 518129 (CN); WU, Qin, Shenzhen, Guangdong 518129 (CN); FAN, Dawei, Shenzhen, Guangdong 518129 (CN); WU, Bo, Shenzhen, Guangdong 518129 (CN)
(74) Representative: Maiwald GmbH
(86) International application number: PCT/CN2023/094805
(87) International publication number: WO 2023/231779

(56) References cited:
- WO-A1-2017/202448
- CN-A- 102 404 796
- CN-A- 102 780 775
- CN-A- 102 811 256
- US-A1- 2014 280 963
- US-A1- 2015 180 765
- R. ALIMI, ED. GOOGLE R. PENNO, ED. CISCO SYSTEMS, INC. Y. YANG, ED. YALE UNIVERSITY S. KIESEL UNIVERSITY OF STUTTGART S. PREVIDI C: "Application-Layer Traffic Optimization (ALTO) Protocol", IETF RFC7285, 7285, 5 September 2014 (2014-09-05), XP015104451
- M. STIEMERLING HOCHSCHULE DARMSTADT S. KIESEL UNIVERSITY OF STUTTGART M. SCHARF NOKIA H. SEIDEL BENOCS S. PREVIDI CISCO: "Application-Layer Traffic Optimization (ALTO) Deployment Considerations", IETF RFC7971, 7971, 7 October 2016 (2016-10-07), XP015115621

## Description

This application claims priority to Chinese Patent Application No. 202210609674.6, filed with the China National Intellectual Property Administration on May 31, 2022 and entitled "ALTO PROTOCOL-BASED COMMUNICATION METHOD AND RELATED APPARATUS".

### TECHNICAL FIELD

This application relates to the field of communication technologies, and in particular, to an ALTO protocol-based communication method and a related apparatus.

### BACKGROUND

WO2017/202448A1 describes that a method comprises: monitoring if a service requires a function, wherein a service host hosts the service; identifying plural function hosts, wherein each of the function hosts is known to host a respective instance of the function; determining for each of the identified function hosts in how far a property of a respective connection between the service host and the respective function host fulfills a requirement, and the determining is based on received connection property indications for the connections, wherein each connection property indication indicates the property of the respective connection; selecting a selected function host out of the plural function hosts, wherein the property of the connection to the selected function host matches the requirement best among the plural connections; requesting the function from the selected function host. US 2015/180765 A1 discloses a method and an apparatus for cross-stratum path computation in a network.

The application layer traffic optimization (Application Layer Traffic Optimization, ALTO) protocol is a request/response (request/response) protocol in which a host is allowed to choose an optimal path from a server with more knowledge of a network to obtain resources. The ALTO protocol is based on the hypertext transfer protocol (Hypertext Transfer Protocol, HTTP). The ALTO protocol supports applications (applications) such as a peer-to-peer (peer-to-peer, P2P) application, a content delivery network (content delivery network, CDN) selection, and a mirror selection.

Operators need to provide virtualized network services (network services, NS) for various service providers, for example, a cloud service provider, an application service provider, or another operator. The service providers provide various services, for example, a security service, a path service, or an edge computing service, for a user based on the network service. Currently, network service interfaces between the operators and the service providers are not unified. Therefore, when the service provider needs to roll out a network service, the operator and the service provider need to respectively develop interfaces to transmit or configure the network service. This makes network service rollout more difficult and reduces timeliness of network service rollout.

### SUMMARY

The invention and its scope of protection is defined by the appended independent claims. Embodiments of the invention are defined by the appended dependent claims. The following aspects and implementations of the summary provide examples of how technical subject matters can be combined.

According to a first aspect, embodiments of this application provide an application layer traffic optimization ALTO protocol-based communication method, including:

An ALTO server sends first information to an ALTO client according to an ALTO protocol, where the first information indicates one or more network services available in a first network, and the first information is used by a first device associated with the ALTO client to obtain the one or more network services.

For ease of description, devices in the first network, for example, a terminal device, customer premises equipment (customer premises equipment, CPE), a network device, an application server, or a software-defined networking in a wide area network (software-defined networking in a wide area network, SD-WAN) controller, are collectively referred to as first devices. In embodiments of this application, the application server is a server (or a server cluster) that runs or manages an application (application). The network device in embodiments of this application may be a physical device like a router, a switch, or a gateway, or may be a virtual device that supports router advertisement and packet forwarding, or the like. This is not limited in embodiments of this application. The CPE includes but is not limited to a device like a terminal device, an optical network terminal (optical network terminal, ONT), a digital subscriber line modem (digital subscriber line modem, DSL Modem), a router, a network switch, a residential gateway, a set-top box, a fixed-mobile convergence product, a home network adapter, or an Internet access gateway.

In embodiments of this application, the ALTO server and a network controller may be integrated, or the ALTO server and the network controller may be independent of each other. The ALTO client and the first device may be integrated, or the ALTO client and the first device are independent of each other.

In a possible implementation, for a specific manner of information transfer between the ALTO server (Server) and the ALTO client (Client) according to the ALTO protocol, refer to the Request For Comments (Request For Comments, RFC) Protocol 7285. Details are not described herein.

In embodiments of this application, a network service allocation (or network service exposure) interface is provided according to the ALTO protocol. This improves efficiency of system interconnection between an operator and a service provider, reduces difficulty in exposing a network service by the operator, reduces difficulty of network service rollout, and improves timeliness of network service rollout.

In a possible implementation of the first aspect, before the ALTO server sends the first information to an ALTO client according to the ALTO protocol, the method includes: The ALTO server determines the first information.

Specifically, first, the ALTO server determines, based on related information of the first network, a network service available in the first network. Then, the ALTO server determines information indicating the one or more network services available in the first network. The information is referred to as the first information in embodiments of this application.

In a possible implementation of the first aspect, that the ALTO server determines the first information includes:

The ALTO server obtains second information, where the second information includes one or more of the following information: topology information of the first network, device information of the first device in the first network, service function chain information of the first network, computing capability information of the first network, or application-aware networking (Application-aware Networking, APN) information of the first network; and the ALTO server determines the first information based on the second information.

Specifically, the topology information of the first network indicates various types of devices (or nodes) included in the first network and upstream and downstream relationships of the various types of devices (or nodes). The ALTO server may determine a topology relationship of the first network based on the topology information of the first network.

The device information of the first device in the first network includes but is not limited to a bandwidth of the first device, a transmission protocol supported by the first device, a transmission delay of the first device, a security function available in the first device, or the like.

The service function chain information of the first network is related service function chain information of a service function (Service Function, SF) available in the first network.

The computing capability information of the first network includes but is not limited to: a computing resource of the first device, a storage resource of the first device, an available computing resource of the first device, an available storage resource of the first device, a maximum quantity of connections supported by the first device, or the like.

In a possible implementation of the first aspect, that the ALTO server determines the first information based on the second information includes: The ALTO server determines, based on the second information, the one or more network services available in the first network; and the ALTO server determines, based on the one or more network services available in the first network, the first information corresponding to the one or more network services available in the first network.

For example, the ALTO server determines, based on the second information, that the first network can provide a security-related network service A, a path service-related network service B, and an edge computing service-related network service C; and then, the ALTO server determines, based on the network service A, the first information corresponding to the network service A, determines, based on the network service B, the first information corresponding to the network service B, and determines, based on the network service C, the first information corresponding to the network service C. In the foregoing method, implementation flexibility of this solution is improved.

In a possible implementation of the first aspect, the second information is the APN information of the first network, and that the ALTO server determines the first information based on the second information includes: The ALTO server determines, from the second information, APN information allocated to the ALTO client, and uses the APN information as the first information.

Specifically, the ALTO server selects some or all information from the second information as the first information. When the second information includes the APN information of the first network, the ALTO server determines, from the second information, APN information allocated to the ALTO client. The APN information allocated to the ALTO client is used as the first information. It may be understood that, that the ALTO server "allocates" the APN information to the ALTO client may alternatively be understood as that the ALTO server "exposes", "transfers", or "synchronizes" the APN information to the ALTO client. For example, the ALTO server determines, from the second information, the APN information exposed to the ALTO client; or the ALTO server determines, from the second information, the APN information transferred for the ALTO client; or the ALTO server determines, from the second information, the APN information synchronized for the ALTO client.

In a possible implementation of the first aspect, the second information is the APN information of the first network, and that the ALTO server determines the first information based on the second information includes: The ALTO server obtains a first correspondence, where the first correspondence indicates a correspondence between the APN information of the first network and the one or more network services; and the ALTO server uses the first correspondence as the first information.

Specifically, the ALTO server may further allocate, to the ALTO client, the correspondence between the APN information of the first network and the one or more network services provided in the first network. For example, the second information includes the correspondence between the APN information of the first network and the one or more network services provided in the first network. For ease of description, the correspondence between the APN information of the first network and the one or more network services provided in the first network is referred to as a first correspondence in this embodiment of this application. The ALTO server obtains the first correspondence (that is, the ALTO server obtains some or all of the first correspondences from the second information), and then, the ALTO server uses the first correspondence as the first information. In the foregoing method, implementation flexibility of this solution is improved.

In a possible implementation of the first aspect, the ALTO server determines a target network service based on the one or more network services available in the first network; and the ALTO server determines, based on the target network service, the first information corresponding to the target network service.

The target network service is determined in the ALTO server. This improves implementation flexibility of this solution.

In a possible implementation of the first aspect, the ALTO server sends a first message to the ALTO client, where the first message indicates the one or more network services available in the first network; and the ALTO server receives a second message from the ALTO client, where the second message indicates the target network service.

Specifically, for example, the first message includes identification information of a plurality of network services, and the plurality of network services belong to the network services available in the first network. After receiving the first message, the ALTO client determines the one or more network services available in the first network. Then, the ALTO client selects one or more network services, as the target network service, from the one or more network services available in the first network. Then, the ALTO client sends the second message to the ALTO server. For example, the second message includes identification information of the target network service.

It may be understood that the target network service may alternatively be determined through interaction between the ALTO server and the first device (for example, the ALTO server sends the first message to the first device, and the first device determines the target network service based on the first message; and then the first device sends the second message to the ALTO server).

The target network service is determined in the ALTO client. This improves implementation flexibility of this solution.

In a possible implementation of the first aspect, that the ALTO server determines the target network service based on the one or more network services available in the first network includes: The ALTO server receives a third message from the ALTO client, where the third message is used to subscribe to the target network service; and the ALTO server determines, based on the third message, the target network service from the one or more network services available in the first network.

Specifically, for example, the ALTO client sends the third message to the ALTO server based on a request of the application server (or the SD-WAN controller, or another first device in the first network). The third message may carry expected information of the target network service. For example, the expected information includes expecting that the obtained target network service belongs to a security service function chain, or that the obtained target network service belongs to network slicing, and a bandwidth of a network slice is greater than 100 megabits per second (mbps), or that the obtained target network service is a storage service, and an available storage resource of the storage service is greater than 500 gigabytes. For another example, the third message carries identification information of a network service to which needs to be subscribed.

The ALTO server may further determine the target network service in response to a subscription request of the ALTO client. This improves implementation flexibility of this solution.

According to a second aspect, embodiments of this application provide an application layer traffic optimization ALTO protocol-based communication method, including:

An ALTO client receives first information from an ALTO server according to an ALTO protocol, where the first information indicates one or more network services available in a first network, and the first information is used by a first device associated with the ALTO client to obtain the one or more network services; and
the ALTO client sends the first information to the first device.

In embodiments of this application, the ALTO server and a network controller may be integrated, or the ALTO server and the network controller may be independent of each other. The ALTO client and the first device may be integrated, or the ALTO client and the first device are independent of each other.

In a possible implementation, for a specific manner of information transfer between the ALTO server (Server) and the ALTO client (Client) according to the ALTO protocol, refer to the Request For Comments (Request For Comments, RFC) Protocol 7285. Details are not described herein.

In embodiments of this application, a network service allocation (or network service exposure) interface is provided according to the ALTO protocol. This improves efficiency of system interconnection between an operator and a service provider, reduces difficulty in exposing a network service by the operator, reduces difficulty of network service rollout, and improves timeliness of network service rollout.

In a possible implementation of the second aspect, when the ALTO client and the first device belong to a same device, the method includes: The ALTO client determines a target network service based on the first information.

Specifically, it is assumed that the ALTO client and the first device belong to a same device, in other words, the ALTO client and the first device are integrated. After receiving the first information, the ALTO client learns of the one or more network services available in the first network. Then, the ALTO client selects one or more network services, as the target network service, from the one or more network services available in the first network. A selection manner may be as follows: The ALTO client (the first device) selects, based on an actual service requirement from the one or more network services available in the first network, a network service with a highest matching degree as the target network service. The ALTO client may be configured to determine the target network service. This improves implementation flexibility of this solution.

In a possible implementation of the second aspect, the first information includes the APN information related to the at least one network service in the one or more network services, and the determining, by the ALTO client, a target network service based on the first information includes: The ALTO client determines the target network service based on the APN information related to the at least one network service in the one or more network services.

Specifically, when a correspondence between the one or more network services and the APN information related to the at least one network service in the one or more network services (for ease of description, the correspondence is referred to as a first correspondence) is preconfigured in the ALTO client, the ALTO client determines, based on the first correspondence and the APN information included in the first information, the target network service corresponding to the APN information. The ALTO client may be configured to determine the target network service. This improves implementation flexibility of this solution.

In a possible implementation of the second aspect, the first information includes the correspondence between the one or more network services and the APN information related to the at least one network service in the one or more network services, and that the ALTO client determines a target network service based on the first information includes: The ALTO client determines the target network service based on the correspondence between the one or more network services and the APN information related to the at least one network service in the one or more network services.

Specifically, the first correspondence may also be configured by the APN server for the APN client, for example, configured in the first information. This improves implementation flexibility. Further, when the ALTO client is integrated with the first device (for example, integrated with an application server), the application server may automatically select the APN information (corresponding to the target network service) based on the first information. This reduces processing complexity.

According to a third aspect, embodiments of this application provide an application layer traffic optimization ALTO protocol-based communication method, including: A first device receives first information sent by an ALTO client, where the first information indicates one or more network services available in a first network, and the first information is used by the first device to obtain the one or more network services; and
the first device determines a target network service based on the first information.

In embodiments of this application, the first device includes but is not limited to a terminal device, customer premises equipment (customer premises equipment, CPE), a network device, an application server, a software-defined networking in a wide area network (software-defined networking in a wide area network, SD-WAN) controller, or another device.

In embodiments of this application, a network service allocation (or network service exposure) interface is provided according to the ALTO protocol. This improves efficiency of system interconnection between an operator and a service provider, reduces difficulty in exposing a network service by the operator, reduces difficulty of network service rollout, and improves timeliness of network service rollout. The first device determines the target network service based on the first information from the ALTO client. This reduces difficulty in obtaining the target network service by the first device, and saves consumed communication resources. In this way, the first device can obtain and use the target network service as soon as possible.

In a possible implementation of the third aspect, the first information includes application-aware networking APN information related to the at least one network service in the one or more network services, and that the first device determines the target network service based on the first information includes: The first device determines the target network service based on the APN information related to the at least one network service in the one or more network services.

Specifically, when a correspondence between the one or more network services and the APN information related to the at least one network service in the one or more network services (for ease of description, the correspondence is referred to as a first correspondence) is preconfigured in the first device, the first device determines, based on the first correspondence and the APN information included in the first information, the target network service corresponding to the APN information. The first device may be configured to determine the target network service. This improves implementation flexibility of this solution.

In a possible implementation of the third aspect, the first information includes a correspondence between the one or more network services and APN information related to the at least one network service in the one or more network services, and that the first device determines the target network service based on the first information includes:
The first device determines the target network service based on the correspondence between the one or more network services and the APN information related to the at least one network service in the one or more network services.

Specifically, the first correspondence may also be configured by the APN server for the first device, for example, configured in the first information. This improves implementation flexibility. Further, when the ALTO client is integrated with the first device (for example, integrated with the application server), the application server may automatically select the APN information (corresponding to the target network service) based on the first information. This reduces processing complexity.

In a possible implementation of the first aspect, the second aspect, or the third aspect, the first information includes identification information of at least one network service in the one or more network services, or service capability information of at least one network service in the one or more network services.

Specifically, the first device may obtain a corresponding network service based on identification information of the network service. For example, identification information of a network service may be a binding segment identifier (binding segment identifier, BSID). For example, if the first network provides a network service A, and identification information of a network service corresponding to the network service A is "BSID-A", the first information includes "BSID-A". Service capability information of a network service is related information that indicates (or represents) a service capability of the network service.

In a possible implementation of the first aspect, the second aspect, or the third aspect, the service capability information of the at least one network service in the one or more network services includes one or more of the following: type information of the network service, specification information of the network service, or quality of service QoS information of the network service.

Specifically, the service capability information of a network service includes one or more of the following: type information of the network service, specification information of the network service, or quality of service (quality of service, QoS) information of the network service. The type information of the network service indicates a specific network service type of the network service. For example, the network service is a network slicing service, or the network service is a path service, or the network service is a security service, or the network service is a computing service. The specification information (or level information) of the network service indicates a related attribute of the network service, for example, high reliability, a large bandwidth, high security, a high SLA level, or a low delay. The quality of service information of the network service includes but is not limited to: a hop count (hop count), a delay, or the like.

In a possible implementation of the first aspect, the second aspect, or the third aspect, the first information includes application-aware networking APN information related to the at least one network service in the one or more network services.

Specifically, the APN information includes APN Header (APN Header) information. The APN information is transferred in the first information, so that a service corresponding to the APN information automatically matches a network service in the first network. In this way, configuration difficulty is reduced and efficiency is improved. The service corresponding to the APN information may be an application (application) or another service. This is not limited in embodiments of this application. For details of a definition of the APN Header information, refer to the internet engineering task force (the internet engineering task force, IETF) draft "draft-li-apn-header".

In a possible implementation of the first aspect, the second aspect, or the third aspect, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In embodiments of this application, APN-related information is collectively referred to as APN information. In embodiments of this application, the APN information may be information (or a field) included in an APN Header (APN Header) field, or the APN information may be an APN Header field. This is not limited in embodiments of this application.

APN identifier (APN ID) field: The APN identifier field includes: an application group identifier (APP-Group-ID) field, used to indicate a group identifier corresponding to an application (Application); a user group identifier (USER-Group-ID) field, used to indicate a group identifier corresponding to a user (user); and a reserved (reserved) field. The APN ID field may include one or more fields (or information) in the APP-Group-ID field, the USER-Group-ID field, or the reserved field. For example, the APN ID field includes only the APP-Group-ID field or the USER-Group-ID field. For another example, the APN ID field includes the APP-Group-ID field and the USER-Group-ID field.

Intent information: The intent information indicates requirement information that is about a network service and that is of an application (application) corresponding to the APN information, and a granularity of the intent information is large. For example, the network service has one or more of the following attributes (or characteristics): high reliability, a large bandwidth, high security, a high SLA level, a low delay, or the like.

APN parameter information: Compared with a granularity of the intent information, a granularity of the APN information is small. For example, the network performance requirement information includes but is not limited to a bandwidth requirement, a delay requirement, a jitter requirement, and/or a packet loss rate requirement. The security service requirement information includes but is not limited to a firewall requirement, an access verification requirement, an anti-spoofing requirement, a tamper resistance requirement, or a security authentication requirement. The network service requirement information includes but is not limited to a path service requirement, a network slicing requirement, a service function chain requirement, or the like. The network service requirement information may further be requirement information for a specific network service, for example, a requirement for a network service A.

The network service is indicated by the APN information. In this way, a service packet carrying the APN information can automatically match a corresponding network service.

In a possible implementation of the first aspect, the second aspect, or the third aspect, the first information includes a correspondence between the one or more network services and APN information related to the at least one network service in the one or more network services.

Specifically, the first correspondence is a correspondence between the one or more network services and the APN information related to the at least one network service in the one or more network services, and may be configured, in the first information, for the ALTO client or the first device. In this way, the ALTO client or the first device automatically matches, based on the first correspondence and the actual service requirement, the APN information corresponding to the target network service.

In still another possible implementation, the first correspondence may alternatively be preconfigured on the ALTO client or the first device.

It should be noted that the first correspondence may be pre-planned. For example, the ALTO server obtains one or more of APN information (including the APN ID information). After the ALTO server obtains the one or more network services available in the first network, the ALTO server determines the first correspondence based on the one or more of APN information and the one or more network services available in the first network. For example, the ALTO server allocates corresponding APN information to a network service, so that there is a correspondence between APN information and a network service.

In a possible implementation of the first aspect, the second aspect, or the third aspect, a type of any one of the one or more network services includes a segment routing SR path service, a traffic engineering TE tunnel path service, a security service, a network slicing service, or a computing capability service.

For example, the path service may be a segment routing (segment routing, SR) path service, a traffic engineering (traffic engineering, TE) tunnel path service, or the like. The path service is not limited in embodiments of this application.

A service function chain is a group of ordered service functions (Service Function, SF) that are usually required by an operator to provide network access for a user, including but not limited to a security service, packet filtering, load balancing, and transmission proxy. A group of ordered SFs through which user traffic passes is called a service function chain (service function chain, SFC). A service function chain is instantiated through a service function path (service function path, SFP) formed by selecting a specific SF on a specific network device. An example in which the service function chain service is the security service is used for description. The security service includes but is not limited to a firewall service, an access verification service, an anti-spoofing service, a tamper resistance service, or a security authentication service.

The computing capability service includes but is not limited to a computing service or a storage service. For example, the computing capability service is the computing service. The computing service includes but is not limited to a video decoding service, an image processing service, an image recognition service, a voice recognition service, a machine translation service, a gesture recognition service, a self-driving service, a route planning service, or the like.

According to a fourth aspect, embodiments of this application provide a communication apparatus, where the communication apparatus is used as an ALTO server, and the communication apparatus includes:
a transceiver module, configured to send first information to an ALTO client according to an ALTO protocol, where the first information indicates one or more network services available in a first network, and the first information is used by a first device associated with the ALTO client to obtain the one or more network services.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes a correspondence between the one or more network services and APN information related to the at least one network service in the one or more network services.

In a possible implementation, a processing module is configured to determine the first information.

In a possible implementation, the transceiver module is further configured to obtain second information, where the second information includes one or more of the following information: topology information of the first network, device information of the first device in the first network, service function chain information of the first network, computing capability information of the first network, or APN information of the first network; and
the processing module is further configured to determine the first information based on the second information.

In a possible implementation,
the processing module is further configured to determine, based on the second information, the one or more network services available in the first network; and
the processing module is further configured to determine, based on the one or more network services available in the first network, the first information corresponding to the one or more network services available in the first network.

In a possible implementation,
the processing module is further configured to: determine, from the second information, APN information allocated to the ALTO client, and use the APN information as the first information.

In a possible implementation,
the transceiver module is further configured to obtain a first correspondence, where the first correspondence indicates a correspondence between the APN information of the first network and the one or more network services; and
the processing module is further configured to use the first correspondence as the first information.

In a possible implementation,
the processing module is further configured to determine a target network service based on the one or more network services available in the first network; and
the processing module is further configured to determine, based on the target network service, the first information corresponding to the target network service.

In a possible implementation,
the transceiver module is further configured to send a first message to the ALTO client, where the first message indicates the one or more network services available in the first network; and
the transceiver module is further configured to receive a second message from the ALTO client, where the second message indicates the target network service.

In a possible implementation,
the transceiver module is further configured to receive a third message from the ALTO client, where the third message is used to subscribe to the target network service; and
the processing module is further configured to determine, based on the third message, the target network service from the one or more network services available in the first network.

In a possible implementation, a type of any one of the one or more network services includes a segment routing SR path service, a traffic engineering TE tunnel path service, a security service, a network slicing service, or a computing capability service.

According to a fifth aspect, embodiments of this application provide a communication apparatus, where the communication apparatus is used as an ALTO client, and the communication apparatus includes:
a transceiver module, configured to receive first information from an ALTO server according to an ALTO protocol, where the first information indicates one or more network services available in a first network, and the first information is used by a first device associated with the ALTO client to obtain the one or more network services; and
the transceiver module is further configured to send the first information to the first device.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes a correspondence between the one or more network services and APN information related to the at least one network service in the one or more network services.

In a possible implementation, when the ALTO client and the first device belong to a same device,
a processing module is configured to determine a target network service based on the first information.

In a possible implementation, the first information includes the APN information related to the at least one network service in the one or more network services, and
the processing module is further configured to determine the target network service based on the APN information related to the at least one network service in the one or more network services.

In a possible implementation, the first information includes the correspondence between the one or more network services and the APN information related to the at least one network service in the one or more network services, and
the processing module is further configured to determine the target network service based on the correspondence between the one or more network services and the APN information related to the at least one network service in the one or more network services.

In a possible implementation, a type of any one of the one or more network services includes a segment routing SR path service, a traffic engineering TE tunnel path service, a security service, a network slicing service, or a computing capability service.

According to a sixth aspect, embodiments of this application provide a communication apparatus, where the communication apparatus is used as a first device, and the communication apparatus includes:
a transceiver module, configured to receive first information sent by an ALTO client, where the first information indicates one or more network services available in a first network, and the first information is used by the first device to obtain the one or more network services; and
a processing module, configured to determine a target network service based on the first information.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services, and
the processing module is further configured to determine the target network service based on the APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes the correspondence between the one or more network services and the APN information related to the at least one network service in the one or more network services, and
the processing module is further configured to determine the target network service based on the correspondence between the one or more network services and the APN information related to the at least one network service in the one or more network services.

In a possible implementation, a type of any one of the one or more network services includes a segment routing SR path service, a traffic engineering TE tunnel path service, a security service, a network slicing service, or a computing capability service.

According to a seventh aspect, embodiments of this application provide a communication apparatus, where the communication apparatus is used as an ALTO server, and the communication apparatus includes a memory and a processor. The memory includes instructions, and the processor is configured to perform any implementation of the first aspect.

In a possible implementation, the processor is configured to send first information to an ALTO client according to an ALTO protocol, where the first information indicates one or more network services available in a first network, and the first information is used by a first device associated with the ALTO client to obtain the one or more network services.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes a correspondence between the one or more network services and APN information related to the at least one network service in the one or more network services.

In a possible implementation, the processor is configured to determine the first information.

In a possible implementation, the processor is further configured to obtain second information, where the second information includes one or more of the following information: topology information of the first network, device information of the first device in the first network, service function chain information of the first network, computing capability information of the first network, or APN information of the first network; and
the processor is further configured to determine the first information based on the second information.

In a possible implementation,
the processor is further configured to determine, based on the second information, the one or more network services available in the first network; and
the processor is further configured to determine, based on the one or more network services available in the first network, the first information corresponding to the one or more network services available in the first network.

In a possible implementation,
the processor is further configured to: determine, from the second information, APN information allocated to the ALTO client, and use the APN information as the first information.

In a possible implementation,
the processor is further configured to obtain a first correspondence, where the first correspondence indicates a correspondence between the APN information of the first network and the one or more network services; and
the processor is further configured to use the first correspondence as the first information.

In a possible implementation,
the processor is further configured to determine a target network service based on the one or more network services available in the first network; and
the processor is further configured to determine, based on the target network service, the first information corresponding to the target network service.

In a possible implementation,
the processor is further configured to send a first message to the ALTO client, where the first message indicates the one or more network services available in the first network; and
the processor is further configured to receive a second message from the ALTO client, where the second message indicates the target network service.

In a possible implementation,
the processor is further configured to receive a third message from the ALTO client, where the third message is used to subscribe to the target network service; and
the processor is further configured to determine, based on the third message, the target network service from the one or more network services available in the first network.

In a possible implementation, a type of any one of the one or more network services includes a segment routing SR path service, a traffic engineering TE tunnel path service, a security service, a network slicing service, or a computing capability service.

According to an eighth aspect, embodiments of this application provide a communication apparatus, where the communication apparatus is used as an ALTO client, and the communication apparatus includes a memory and a processor. The memory includes instructions, and the processor is configured to perform any implementation of the second aspect.

In a possible implementation, the processor is configured to receive first information from an ALTO server according to an ALTO protocol, where the first information indicates one or more network services available in a first network, and the first information is used by a first device associated with the ALTO client to obtain the one or more network services; and
the processor is further configured to send the first information to the first device.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes a correspondence between the one or more network services and APN information related to the at least one network service in the one or more network services.

In a possible implementation, when the ALTO client and the first device belong to a same device,
a processor is configured to determine a target network service based on the first information.

In a possible implementation, the first information includes the APN information related to the at least one network service in the one or more network services, and
the processor is further configured to determine the target network service based on the APN information related to the at least one network service in the one or more network services.

In a possible implementation, the first information includes the correspondence between the one or more network services and the APN information related to the at least one network service in the one or more network services, and
the processor is further configured to determine the target network service based on the correspondence between the one or more network services and the APN information related to the at least one network service in the one or more network services.

In a possible implementation, a type of any one of the one or more network services includes a segment routing SR path service, a traffic engineering TE tunnel path service, a security service, a network slicing service, or a computing capability service.

According to a ninth aspect, embodiments of this application provide a communication apparatus, where the communication apparatus is used as a first device, and the communication apparatus includes a memory and a processor. The memory includes instructions, and the processor is configured to perform any implementation of the third aspect.

In a possible implementation, the processor is configured to receive first information sent by an ALTO client, where the first information indicates one or more network services available in a first network, and the first information is used by the first device to obtain the one or more network services; and
a processor is configured to determine a target network service based on the first information.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services, and
the processor is further configured to determine the target network service based on the APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes the correspondence between the one or more network services and the APN information related to the at least one network service in the one or more network services, and
the processor is further configured to determine the target network service based on the correspondence between the one or more network services and the APN information related to the at least one network service in the one or more network services.

In a possible implementation, a type of any one of the one or more network services includes a segment routing SR path service, a traffic engineering TE tunnel path service, a security service, a network slicing service, or a computing capability service.

A tenth aspect of this application provides a communication apparatus, including a communication interface, and
a processor connected to the communication interface. Based on the communication interface and the processor, the communication apparatus is enabled to perform the method according to any one of the first aspect, the second aspect, and/or the third aspect.

According to an eleventh aspect, a communication system is provided, where the communication system includes the communication apparatuses according to the fourth aspect and the fifth aspect.

According to a twelfth aspect, a communication system is provided, where the communication system includes the communication apparatuses according to the fourth aspect, the fifth aspect, and the sixth aspect.

A thirteenth aspect of this application provides a computer storage medium. The computer storage medium may be non-volatile. The computer storage medium stores computer-readable instructions. When the computer-readable instructions are executed by a processor, the method in any one of the implementations of the first aspect, the second aspect, or the third aspect is implemented.

A fourteenth aspect of this application provides a computer program product including instructions. When the computer program product runs on a computer, the computer is enabled to perform the method in any one of the implementations of the first aspect, the second aspect, or the third aspect.

A fifteenth aspect of this application provides a chip system. The chip system includes a processor and an interface circuit, configured to support a network device in implementing functions in the foregoing aspects, for example, sending or processing data and/or information in the foregoing methods. In a possible design, the chip system further includes a memory. The memory is configured to store program instructions and data that are necessary for the network device. The chip system may include a chip, or may include a chip and another discrete component.

A sixteenth aspect of this application provides a communication apparatus, including:
a memory, including instructions; and
a processor, where when the processor executes the instructions,
the communication apparatus is enabled to perform the method according to any one of the first aspect, the second aspect, and/or the third aspect.

### BRIEF DESCRIPTION OF DRAWINGS

FIG. 1 is a diagram of a scenario of an ALTO protocol;
FIG. 2 is a diagram of an APN Header field;
FIG. 3 is a diagram of an APN ID;
FIG. 4a is a diagram of an operator-service provider system;
FIG. 4b is a diagram of a communication system scenario according to an embodiment of this application;
FIG. 4c is a diagram of a communication system scenario according to an embodiment of this application;
FIG. 5 is a diagram of a communication system scenario according to an embodiment of this application;
FIG. 6 is a diagram of an embodiment of an application layer traffic optimization ALTO protocol-based communication method according to an embodiment of this application;
FIG. 7 is a schematic flowchart of determining a target network service according to an embodiment of this application;
FIG. 8 is another schematic flowchart of determining a target network service according to an embodiment of this application;
FIG. 9 is another schematic flowchart of determining a target network service according to an embodiment of this application;
FIG. 10 is another schematic flowchart of determining a target network service according to an embodiment of this application;
FIG. 11 is a diagram of an application scenario according to an embodiment of this application;
FIG. 12 is a diagram of an application scenario according to an embodiment of this application;
FIG. 13a is a diagram of an application scenario according to an embodiment of this application;
FIG. 13b is a diagram of an application scenario according to an embodiment of this application;
FIG. 14 is a diagram of a hardware structure of a communication apparatus according to an embodiment of this application;
FIG. 15 is a diagram of an embodiment of a communication apparatus 1500 according to an embodiment of this application; and
FIG. 16 is a diagram of an embodiment of a communication apparatus 1600 according to an embodiment of this application.

### DESCRIPTION OF EMBODIMENTS

Embodiments of this application are described. It is clearly that described embodiments are merely some but not all of embodiments of this application. A person of ordinary skill in the art may learn that, with emergence of a new application scenario, the technical solutions provided in embodiments of this application are also applicable to a similar technical problem.

In the specification, claims, and accompanying drawings of this application, terms "first", "second", and so on are intended to distinguish between similar objects but do not necessarily indicate a specific order or sequence. It should be understood that the descriptions termed in such a manner are interchangeable in proper cases, so that embodiments can be implemented in another order than the order illustrated or described in this application. Moreover, terms "include", "have" and any other variants are intended to cover the non-exclusive inclusion, for example, a process, method, system, product, or device that includes a series of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electrical or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

First, some concepts in embodiments of this application are described.

### 1. Application layer traffic optimization (Application Layer Traffic Optimization, ALTO) protocol

The ALTO protocol (ALTO protocol) is a request/response (request/response) protocol in which a host is allowed to choose an optimal path from a server with more knowledge of a network to obtain resources. The ALTO protocol is based on the hypertext transfer protocol (Hypertext Transfer Protocol, HTTP). The ALTO protocol supports applications (applications) such as a peer-to-peer (peer-to-peer, P2P) application, a content delivery network (content delivery network, CDN) selection, and a mirror selection.

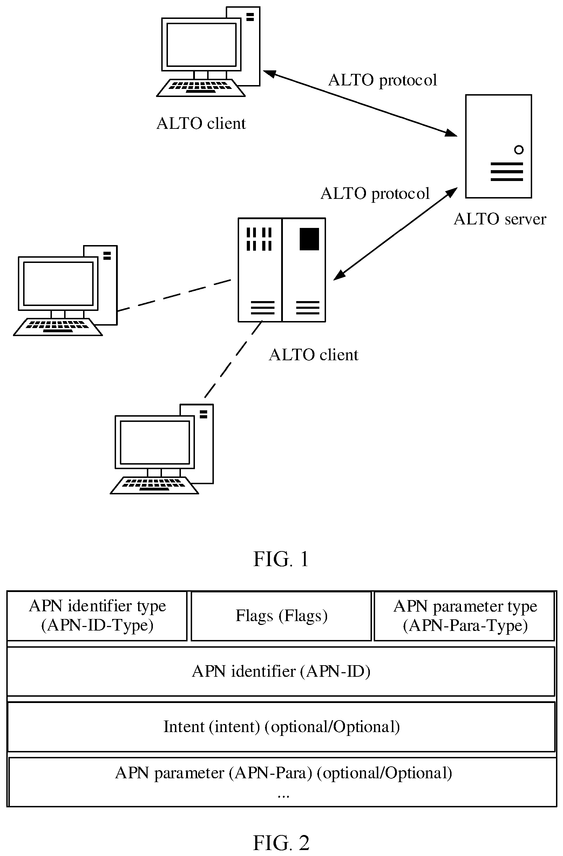

For ease of understanding, refer to FIG. 1. FIG. 1 is a diagram of a scenario of an ALTO protocol. This scenario includes an ALTO server (Server) and an ALTO client (Client). The ALTO protocol is used for information transfer between the ALTO server (Server) and the ALTO client (Client).

In the current ALTO protocol, transfer of a network performance parameter is supported. For example, the network performance parameter includes one or more of the following parameters: a one-way delay (one-way delay), a round-trip delay (round-trip delay), a delay variation (delay variation), a loss rate (loss rate), a residual bandwidth (residual bandwidth), an available bandwidth (available bandwidth), a transmission control protocol throughput (Transmission Control Protocol throughput, TCP throughput), or a hop count (hop count).

The ALTO server or the ALTO client may obtain the foregoing information through a plurality of channels, for example, a routing protocol (Routing Protocol) and a provisioning policy (provisioning policy).

For a specific manner of information transfer between the ALTO server (Server) and the ALTO client (Client) according to the ALTO protocol, refer to the Request For Comments (Request For Comments, RFC) Protocol 7285. Details are not described herein.

### 2. Network service (network service, NS)

The network service in embodiments of this application includes but is not limited to a path service, a service function chain service, a network slicing service, a computing capability service, or the like. The following separately describes these network services.

### Path service:

For example, the path service may be a segment routing (segment routing, SR) path service, a traffic engineering (traffic engineering, TE) tunnel path service, or the like. The path service is not limited in embodiments of this application.

Segment routing (segment routing, SR): The SR is a protocol designed based on source routing to forward a data packet in a network. In the SR, a network path is divided into segments and segment identifiers (segment ids, SID) are allocated to the segments and network devices. An SID list (SID List, also referred to as a label stack in SR-MPLS) may be obtained by sorting the SIDs in order. The SID list may indicate a forwarding path. An SR technology is used, so that a node and a path through which a data packet carrying the SID list passes can be specified, to meet a traffic optimization requirement. To make an analogy, the data packet may be compared to luggage, and the SR may be compared to a label attached to the luggage. If the luggage needs to be sent from a region A to a region D through a region B and a region C, a label "Go to the region B first, then to the region C, and finally to the region D" may be attached to the luggage in the origin region A. In this way, only the label on the luggage needs to be identified in each region, and the luggage may be forwarded from one region to another region based on the label of the luggage. In the SR technology, a headend adds a label to the data packet, and a transit node may forward the data packet to a next node based on the label until the data packet arrives at a destination node. For example, if <SID 1, SID 2, SID 3> is inserted into a packet header of the data packet, the data packet (packet) is first forwarded to a node corresponding to the SID 1, then forwarded to a node corresponding to the SID 2, and then forwarded to a node corresponding to the SID 3. The SR-MPLS is short for segment routing multi-protocol label switching (segment routing multi-protocol label switching).

### Network slice:

The network slice is a logical network customized on a physical or virtual network infrastructure based on different service requirements. The network slice may be a complete end-to-end network that includes an access network, a transmission network, a core network, and an application server, can provide a complete communication service, and has a specific network capability. The network slice may alternatively be any combination of an access network, a transmission network, a core network, and an application server. Network slicing may be generally used in a 5th generation mobile communication technology (the 5th generation mobile communication, 5G) network. In the 5G network, a multi-purpose network may be implemented through network slicing, to meet requirements of service-level agreements (Service-level agreements, SLA) of different services. One network slice usually provides a type of network with same service requirement assurance. In such a network structure, an operator can provide a network for a user as a service, and can freely combine physical networks based on indicators such as a rate, a capacity, coverage, a delay, reliability, security, and availability, to meet requirements of different users.

### Service function chain service:

A service function chain is a group of ordered service functions (Service Function, SF) that are usually required by an operator to provide network access for a user, including but not limited to a security service, packet filtering, load balancing, and transmission proxy. A group of ordered SFs through which user traffic passes is called a service function chain (service function chain, SFC). A service function chain is instantiated through a service function path (service function path, SFP) formed by selecting a specific SF on a specific network device. An example in which the service function chain service is the security service is used for description. The security service includes but is not limited to a firewall service, an access verification service, an anti-spoofing service, a tamper resistance service, or a security authentication service.

### Computing capability service:

The computing capability service includes but is not limited to a computing service or a storage service. For example, the computing capability service is the computing service. The computing service includes but is not limited to a video decoding service, an image processing service, an image recognition service, a voice recognition service, a machine translation service, a gesture recognition service, a self-driving service, a route planning service, or the like.

Computing services provided by various network devices in a network may also be referred to as edge computing (edge computing) services, multi-access edge computing (multi-access edge computing) services, or mobile edge computing (mobile edge computing) services.

### 3. Application-aware network (Application-aware Networking, APN)

Application (application) information (that is, APN information) is carried in a service packet and security and reliability of the application information is ensured. In this way, a network can aware applications and provide differentiated services for the applications based on requirements of the application, for example, refined network resource allocation, transmission path scheduling, or service-level agreement (service-level agreement, SLA) quality of service assurance.

In embodiments of this application, APN-related information is collectively referred to as APN information. In embodiments of this application, the APN information may be information (or a field) included in an APN Header (APN Header) field, or the APN information may be an APN Header field. This is not limited in embodiments of this application.

Specifically, in the internet engineering task force (the internet engineering task force, IETF) draft "draft-li-apn-header", the APN Header field is defined as follows: For ease of understanding, refer to FIG. 2. FIG. 2 is a diagram of an APN Header field. Specifically, the APN Header field includes an APN identifier type (APN-ID-Type) field, a Flags (Flags) field, an APN parameter type (APN-Para-Type) field, an APN identifier (APN-ID) field, an Intent (Intent) field, and an APN parameter (APN-Para) field. The Intent field is an optional field, and the APN parameter field is an optional field.

Specifically, a length of the APN-ID-Type field is 8 bits (bits), and the APN-ID-Type field is used to identify a type of an APN-ID (or APN ID).

A length of the Flags field is 8 bits.

A length of the APN-Para-Type field is 16 bits. The APN-Para-Type field indicates APN parameters (APN parameters) related to corresponding APN IDs. In a manner of setting bits, a specific requirement is reflected. When a bit 0 of the APN-Para-Type field is set (Bit 0 When set), it indicates that there is a bandwidth requirement. When a bit 1 of the APN-Para-Type field is set, it indicates that there is a delay requirement. When a bit 2 of the APN-Para-Type field is set, it indicates that there is a jitter requirement. When a bit 3 of the APN-Para-Type field is set, it indicates that there is a packet loss rate requirement.

Currently, the APN ID has three lengths: 32 bits, 64 bits, and 128 bits. The APN ID type separately indicates APN IDs of the three lengths: 32 bits (Type I), 64 bits (Type II) and 128 bits (Type III).

A length of the Intent field is 32 bits, and the Intent field indicates a service requirement for a network.

The APN-Para field includes a series of APN parameters (APN parameters), which are specified by the APN-Para-Type field. In the APN Header, the APN ID is a forcible carried field, and all fields following the APN ID are optional carried fields, such as the Intent field and the APN Parameters field.

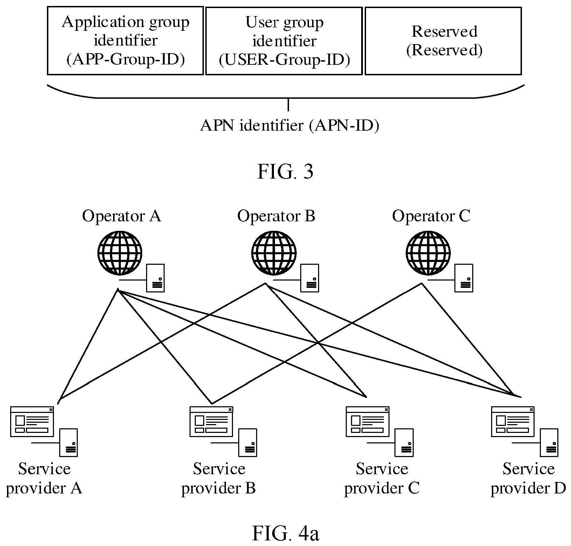

For the APN identifier (APN ID) field, refer to FIG. 3. FIG. 3 is a diagram of an APN ID. The APN identifier field includes: an application group identifier (APP-Group-ID) field, used to indicate a group identifier corresponding to an application (Application); a user group identifier (USER-Group-ID) field, used to indicate a group identifier corresponding to a user (user); and a reserved (reserved) field. The APN ID field may include one or more fields (or information) in the APP-Group-ID field, the USER-Group-ID field, or the reserved field. For example, the APN ID field includes only the APP-Group-ID field or the USER-Group-ID field. For another example, the APN ID field includes the APP-Group-ID field and the USER-Group-ID field.

With development of communication technologies, operators support to provide virtualized network services for various service providers, for example, a cloud service provider, an application service provider, or another operator. The service providers provide various services, for example, a security service, a path service, or an edge computing service, for a user based on the network service. For ease of understanding, refer to FIG. 4a. FIG. 4a is a diagram of an operator-service provider system. An example in which the operator-service provider system includes an operator A, an operator B, an operator C, a service provider A, a service provider B, a service provider C, and a service provider D is used for description. It may be understood that the operator and the service provider in FIG. 4a is a system of the operator and a system of the service provider. The service provider A rolls out a network service A on the operator A and the operator B; the service provider B rolls out a network service B on the operator A and the operator C; the service provider C rolls out a network service C on the operator A and the operator B; and the service provider D rolls out a network service D on the operator A, the operator B, and the operator C.

It can be learned from FIG. 4a that a system of an operator needs to interconnect with systems of a plurality of service providers, and correspondingly a system of a service provider usually needs to interconnect with systems of a plurality of operators. Currently, network service interfaces between the operators and the service providers are not unified. Therefore, when the service provider needs to roll out a network service, the operator and the service provider need to respectively develop interfaces to transmit or configure the network service. This makes network service rollout more difficult and reduces timeliness of network service rollout.

Based on this, embodiments of this application provide an application layer traffic optimization ALTO protocol-based communication method. A network service allocation (or network service exposure) interface is provided according to the ALTO protocol. This improves efficiency of system interconnection between an operator and a service provider, reduces difficulty in exposing a network service by the operator, reduces difficulty of network service rollout, and improves timeliness of network service rollout.

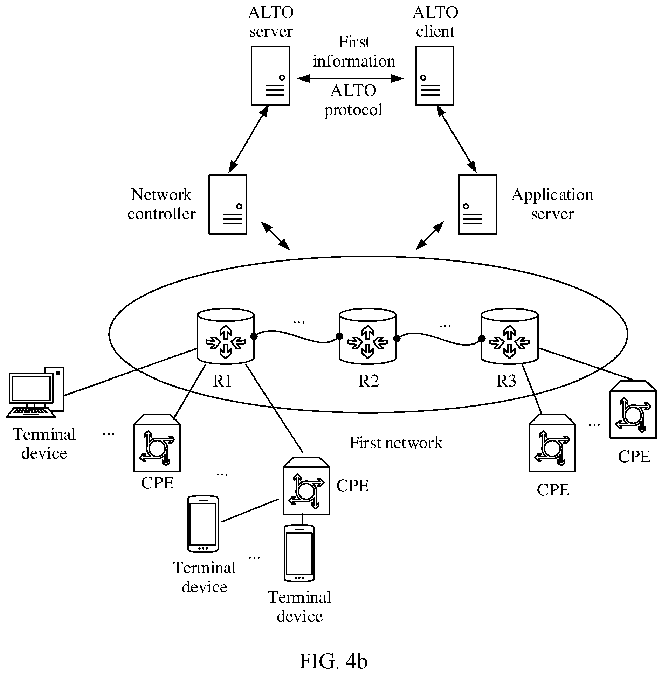

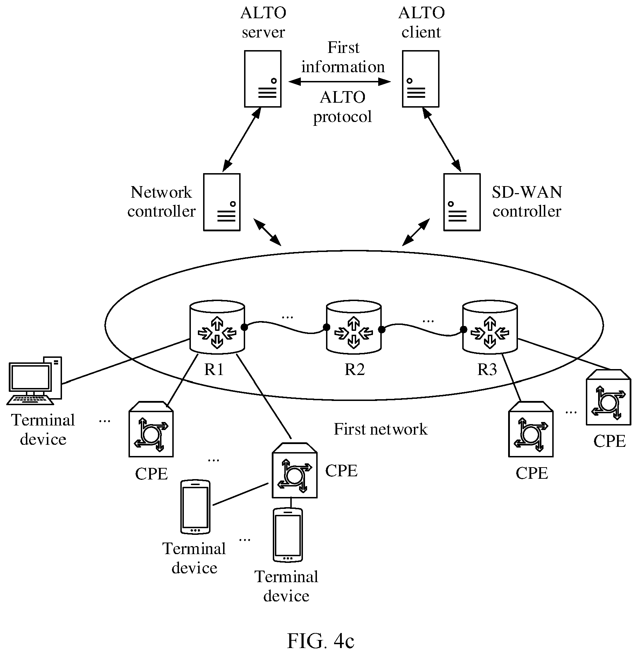

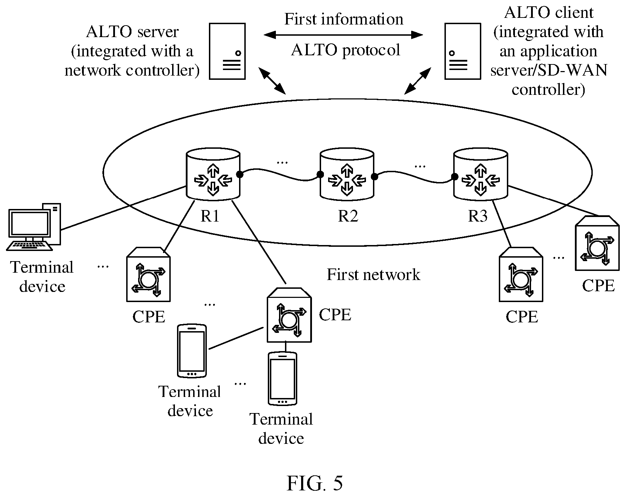

The following describes a communication system scenario in embodiments of this application. Based on details about whether an ALTO server and/or an ALTO client are/is integrated with another device, reference may be respectively made to FIG. 4b and FIG. 4c, or FIG. 5.

For example, FIG. 4b is a diagram of a communication system scenario according to an embodiment of this application. A communication system includes: a network device (for example, nodes R1 to R3 in the figure), a terminal device, customer premises equipment (customer premises equipment, CPE), a network controller, an application server, an ALTO server, and an ALTO client. A first network includes but is not limited to the terminal device, the CPE, the network device, and the application server. First information is transferred between the ALTO server and the ALTO client according to an ALTO protocol, where the first information indicates one or more network services available in the first network.

For example, FIG. 4c is a diagram of a communication system scenario according to an embodiment of this application. A communication system includes: a network device (for example, nodes R1 to R3 in the figure), a terminal device, customer premises equipment (customer premises equipment, CPE), a software-defined networking in a wide area network (software-defined networking in a wide area network, SD-WAN) controller, an application server, an ALTO server, and an ALTO client. It should be noted that the communication system scenarios shown in FIG. 4b and FIG. 4c are merely examples, and constitute no limitation on a communication system to which embodiments of this application are applicable. The communication system shown in FIG. 4b or FIG. 4c may further include more or fewer devices. The devices included in the communication system shown in FIG. 4b or FIG. 4c may alternatively be deployed or connected in another manner.

A network corresponding to the communication system scenario is referred to as the first network. For ease of description, devices that are associated with the ALTO client and that are in the first network are collectively referred to as first devices. For example, the first devices include the terminal device, the CPE, the network device, the application server, the SD-WAN controller, or another device (not shown in the figure).

The first information is transferred between the ALTO server and the ALTO client according to the ALTO protocol, where the first information indicates the one or more network services available in the first network.

The ALTO server and/or the ALTO client in the scenarios in FIG. 4b and FIG. 4c may be deployed in a cloud server, or a cloud service provided by the cloud server. The cloud server may be a server deployed on a cloud to implement a centralized service. The ALTO server and/or the ALTO client may alternatively be deployed in a computing device. The computing device in embodiments of this application may be a requirement device of a data stream. After obtaining the data stream, the computing device may display the data stream or perform corresponding processing. Alternatively, after obtaining the data stream, the computing device displays the data stream by using another device. Alternatively, after obtaining the data stream, the computing device displays a processed data stream by using another device after performing corresponding processing. This is not limited in this application. The computing device may be a server or a terminal device. An actual product form of the computing device is not limited in this application.

In another communication system scenario, the ALTO server may be integrated with another device, and the ALTO client may also be integrated with another device. For example, FIG. 5 is a diagram of a communication system scenario according to an embodiment of this application. The communication system includes a network device (for example, nodes R1 to R3 in the figure), a terminal device, CPE, an ALTO server (integrated with a network controller), and an ALTO client (integrated with an SD-WAN controller or an application server). The network controller may also be referred to as a network management system, and may perform management, operation, and maintenance, policy control, and the like on a network device in a first network. A specific function of the network controller is not limited in embodiments of this application.

It may be understood that the ALTO client may alternatively be integrated with a first device in the first network. For example, the ALTO client is integrated with the terminal device, or the ALTO client is integrated with the CPE. This is not limited in embodiments of this application.

In embodiments of this application, the application server is a server (or a server cluster) that runs or manages an application (application).

The network device in embodiments of this application may be a physical device like a router, a switch, or a gateway, or may be a virtual device that supports router advertisement and packet forwarding, or the like. This is not limited in embodiments of this application.

The terminal device in embodiments of this application includes but is not limited to a mobile phone, an Internet of Things device, a smart home device, an industrial control device, a vehicle device, an uncrewed aerial vehicle device, or the like. In embodiments of this application, the terminal device is various terminal devices or apparatuses having a wire communication function, for example, a mobile phone (which is also referred to as a "cellular" phone) and a computer having a mobile terminal, or may be a portable, pocket-sized, handheld, computer built-in, or vehicle-mounted mobile apparatus, which exchange language and/or data with a radio access network. For example, the terminal device is a device like a personal communication service (personal communication service, PCS) phone, a cordless phone, a session initiation protocol (SIP) phone, a wireless local loop (wireless local loop, WLL) station, or a personal digital assistant (personal digital assistant, PDA). The terminal device may also be referred to as a system, a subscriber unit (subscriber Unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), or a user device (user device). The terminal device is, for example, a vehicle, a vehicle-mounted device, a vehicle-mounted module or unit, a flight device (including but not limited to an uncrewed aerial vehicle), an airborne device, an airborne module or unit, a drive test infrastructure device, a handheld device, a wearable device, a computing device, or another processing device connected to a wireless modem, for example, vehicle user equipment (vehicle user equipment, VUE) or air conditioner user equipment.

In embodiments of this application, the CPE includes but is not limited to a device like a terminal device, an optical network terminal (optical network terminal, ONT), a digital subscriber line modem (digital subscriber line modem, DSL Modem), a router, a network switch, a residential gateway, a set-top box, a fixed-mobile convergence product, a home network adapter, or an Internet access gateway. The CPE may enable a user to obtain a corresponding service through a nearby local area network (local area network, LAN).

In addition to devices shown in FIG. 4b and FIG. 4c and FIG. 5, the communication system in embodiments of this application may further include another device. This is not limited in embodiments of this application. For example, the communication system may include an edge computing device, where the edge computing device is a device configured to perform multi-access edge computing (Multi-access Edge Computing) or mobile edge computing (mobile edge computing). The edge computing device is similar to the computing device, and includes but is not limited to a mobile phone, an Internet of Things device, a smart home device, an industrial control device, a vehicle device, an uncrewed aerial vehicle device, or the like.

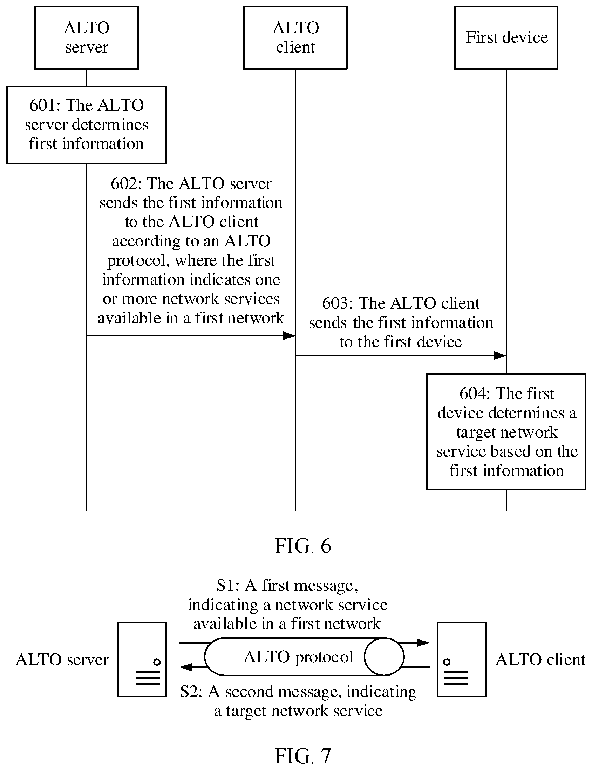

The following describes embodiments of this application with reference to the accompanying drawings. FIG. 6 is a diagram of an embodiment of an application layer traffic optimization ALTO protocol-based communication method according to an embodiment of this application. The application layer traffic optimization ALTO protocol-based communication method provided in this embodiment of this application includes the following steps.

601: An ALTO server determines first information.

In this embodiment of this application, information indicating one or more network services available in a first network is referred to as the first information.

In step 601, the ALTO server may determine the first information in a plurality of manners. In a possible implementation, the ALTO server determines the first information based on preconfigured information. For example, the information preconfigured by the ALTO server includes the first information.

In another possible implementation, the ALTO server determines the first information based on related information of the first network. For example, first, the ALTO server determines, based on the related information of the first network, a network service available in the first network. Then, the ALTO server determines the first information.

### First information:

In a specific implementation, the first information includes identification information of at least one network service in the one or more network services, or service capability information of at least one network service in the one or more network services.

Specifically, a first device may obtain a corresponding network service based on identification information of the network service. For example, identification information of a network service may be a binding segment identifier (binding segment identifier, BSID). For example, if the first network provides a network service A, and identification information of a network service corresponding to the network service A is "BSID-A", the first information includes "BSID-A". For another example, if the first network provides a network service A and a network service B, and the network service A and the network service B may be combined to provide services (for example, the network service A is a security service, and the network service B is an edge computing service), identification information of a network service is shown in Table 1.

**Table 1**

| Identification information of a network service | Network service |
|---|---|
| BSID-A | Network service A |
| BSID-B | Network service B |
| BSID-C | Network service A and network service B |

Service capability information of a network service is related information that indicates (or represents) a service capability of the network service.

Further, the service capability information of a network service includes one or more of the following: type information of the network service, specification information of the network service, or quality of service (quality of service, QoS) information of the network service. The type information of the network service indicates a specific network service type of the network service. For example, the network service is a network slicing service, or the network service is a path service, or the network service is a security service, or the network service is a computing service. The specification information (or level information) of the network service indicates a related attribute of the network service, for example, high reliability, a large bandwidth, high security, a high SLA level, a low delay, or a specific specification parameter, for example, specification information of a computing capability service includes a maximum quantity of connections. The quality of service information of the network service includes but is not limited to: a hop count (hop count), a delay, a packet loss rate, or the like. For example, reliability is 99.999%, and a bandwidth is 10 Gbit (Gigabit)/second.

In another specific implementation, the first information includes application-aware networking APN information related to at least one network service in the one or more network services. In embodiments of this application, the APN information may be information (or a field) included in an APN Header (APN Header) field, or the APN information may be an APN Header field. This is not limited in embodiments of this application. For specific content of APN Header information, refer to FIG. 2.

The APN information is transferred in the first information, so that a service corresponding to the APN information automatically matches a network service in the first network. In this way, configuration difficulty is reduced and efficiency is improved. The service corresponding to the APN information may be an application (application) or another service. This is not limited in embodiments of this application.

Further, the APN information includes one or more of the following: APN ID information, intent information, or APN parameter information. The APN ID information includes USER-Group-ID information and/or APP-Group-ID information. The APN parameter information includes but is not limited to one or more of the following: network performance requirement information, security service requirement information, or network service requirement information.

Specifically, the APN information may include only the APN ID information, that is, the intent information and the APN parameter information are optional information. The APN ID information may include the USER-Group-ID information or the APP-Group-ID information, and the APN ID information may alternatively include both the USER-Group-ID information and the APP-Group-ID information.

Intent information: The intent information indicates requirement information that is about a network service and that is of an application (application) corresponding to the APN information. For example, the network service has one or more of the following attributes (or characteristics): high reliability, a large bandwidth, high security, a high SLA level, a low delay, or the like.

APN parameter information: For example, the network performance requirement information includes but is not limited to a bandwidth requirement, a delay requirement, a jitter requirement, and/or a packet loss rate requirement. The security service requirement information includes but is not limited to a firewall requirement, an access verification requirement, an anti-spoofing requirement, a tamper resistance requirement, or a security authentication requirement. The network service requirement information includes but is not limited to a path service requirement, a network slicing requirement, a service function chain requirement, or the like. The network service requirement information may further be requirement information for a specific network service, for example, a requirement for a network service A.

For example, the APN parameter information is in the APN Header field, and includes the following two parts: an APN-ID-Type (APN-ID-Type) field and an APN-Para field, where the APN-ID-Type (APN-ID-Type) field is an optional field. Specifically, a length of the APN-ID-Type field is 8 bits (bits), and the APN-ID-Type field is used to identify a type of an APN-ID (or APN ID).

A length of the APN-Para-Type field is 16 bits. The APN-Para-Type field indicates APN parameters (APN parameters) related to corresponding APN IDs. In a manner of setting bits, a specific requirement is reflected. When a bit 0 of the APN-Para-Type field is set (Bit 0 When set), it indicates that there is a bandwidth requirement. When a bit 1 of the APN-Para-Type field is set, it indicates that there is a delay requirement. When a bit 2 of the APN-Para-Type field is set, it indicates that there is a jitter requirement. When a bit 3 of the APN-Para-Type field is set, it indicates that there is a packet loss rate requirement.

The APN-Para field includes a series of APN parameters (APN parameters), which are specified by the APN-Para-Type field.

For example, the APN IDID information is in the APN Header field and includes the following field: an APN ID field; and the intent information is in the APN Header field and includes the following field: an Intent field.

In the APN Header field, the APN ID field is a forcible carried field, and all fields following the APN ID field are optional carried fields, such as an Intent field and an APN Parameters field.

In another specific implementation, the first information includes a correspondence between the one or more network services and APN information related to at least one network service in the one or more network services. For ease of description, the correspondence between the network service and the APN information related to the network service is referred to as a first correspondence in embodiments of this application. Based on the first correspondence, a first device in the first network can match a corresponding network service based on the APN information, to reduce difficulty in setting a network service. For example, the first correspondence is shown in Table 2.

**Table 2**

| APN information | Network service |
|---|---|
| APN-A | Network service A |
| APN-B | Network service B |
| APN-C | Network service A and network service B |

Further, the first correspondence may be pre-configured in the first device in the first network. For example, the first correspondence may be pre-configured in an ALTO client. In this case, when the first information includes identification information of a network service, the ALTO client determines, based on the identification information of the network service and the first correspondence, a network service corresponding to the identification information of the network service (the identification information of the network service carried in the first information), and further determines APN information corresponding to the network service. The ALTO client sends the APN information to the first device. The first device determines, based on the APN information from the ALTO client and the preconfigured first correspondence, the network service that needs to be used. This reduces communication transmission overheads of each device in the first network.

It may be understood that the first information may include one or more of the foregoing information. For example, the first information includes the identification information of the network service and service capability information of the network service. For another example, the first information includes the APN information and the first correspondence. For another example, the first information includes the identification information of the network service, the service capability information of the network service, and the first correspondence. This is not limited in embodiments of this application. For example, as shown in Table 3:

**Table 3**

| Network service | Identification information of a network service | Service capability information of a network service |
|---|---|---|
| Network service D (path service: SID list-A) | BSID-D | Type information: path service |
| | | Quality of service information: delay: 100 milliseconds; and bandwidth: 100 megabits per second |

In Table 3, the identification information of the network service of the network service D is "BSID-D", a service type of the network service D is a path service, and there is a mapping relationship between the identification information "BSID-D" and a TE path SID list "SID list-A", where "BSID-D" corresponds to a path from a source SAP to a destination SAP. Specifically, the path crosses a plurality of autonomous system (autonomous system, AS) management domains, including: an AS 2, an AS 3, and an AS 4. The delay of the network service D is 100 milliseconds, and the bandwidth is 100 megabits per second.

In a specific implementation, the ALTO server obtains second information. The ALTO server may obtain the second information from all devices in the first network. When the ALTO server is integrated with a network controller, for example, the ALTO server is used as a functional module inside the network controller, the ALTO server obtains the second information by using the network controller. When the ALTO server and the network controller are independent of each other, the ALTO server sends a request to the network controller to obtain the second information; or the network controller actively reports the second information to the ALTO server after obtaining the second information.

The second information may be configured on the ALTO server. The second information includes one or more of the following information: topology information of the first network, device information of the first device in the first network, service function chain information of the first network, computing capability information of the first network, or APN information of the first network.

Details of the second information are as follows.

The topology information of the first network indicates various types of devices (or nodes) included in the first network and upstream and downstream relationships of the various types of devices (or nodes). The ALTO server may determine a topology relationship of the first network based on the topology information of the first network. Specifically, the topology information of the first network includes topology information including an ingress node (ingress node) and an egress node (egress node) in one or more domains (domain) included in the first network. For example, the first network is divided into a source domain (Source Domain), a transit domain (transit domain), and a destination domain (Destination Domain) based on a data transmission path (or a data forwarding path) from the terminal device to the application server. The topology information of the first network includes address information of a source service access point (source SAP) in the source domain, address information of an egress node in the source domain, address information of an ingress node in the transit domain, address information of an egress node in the transit domain, address information of an ingress node in the destination domain, and address information of a destination service access point (Destination SAP) in the destination domain.

The device information of the first device in the first network includes but is not limited to: a key performance indicator (key performance indicator, KPI) like a transmission delay or a bandwidth of the first device, a transmission protocol supported by the first device, a security function available in the first device, or the like.

The service function chain information of the first network is related service function chain information of a service function (Service Function, SF) available in the first network.

The computing capability information of the first network includes but is not limited to: a computing resource of the first device, a storage resource of the first device, an available computing resource of the first device, an available storage resource of the first device, a maximum quantity of connections supported by the first device, or the like.

After obtaining the second information, the ALTO server determines the first information based on the second information. Details are as follows.

In a possible implementation, the ALTO server determines, based on the second information, the one or more network services available in the first network; and then, the ALTO server determines, based on the one or more network services available in the first network, the first information corresponding to the one or more network services available in the first network. For example, the ALTO server determines, based on the second information, that the first network can provide a security-related network service A, a path service-related network service B, and an edge computing service-related network service C; and then, the ALTO server determines, based on the network service A, the first information corresponding to the network service A, determines, based on the network service B, the first information corresponding to the network service B, and determines, based on the network service C, the first information corresponding to the network service C.

In another possible implementation, after determining, based on the second information, the one or more network services available in the first network, the ALTO server determines a target network service based on the one or more network services available in the first network. Then, the ALTO server determines, based on the target network service, the first information corresponding to the target network service. Specifically, there may be a plurality of possible implementations to determine the target network service, and details are described in subsequent embodiments. Details are not described herein.

In another possible implementation, the ALTO server selects some or all information from the second information as the first information. When the second information includes the APN information of the first network, the ALTO server determines, from the second information, APN information allocated to the ALTO client. The APN information allocated to the ALTO client is used as the first information. It may be understood that, that the ALTO server "allocates" the APN information to the ALTO client may alternatively be understood as that the ALTO server "exposes", "transfers", or "synchronizes" the APN information to the ALTO client. For example, the ALTO server determines, from the second information, the APN information exposed to the ALTO client; or the ALTO server determines, from the second information, the APN information transferred for the ALTO client; or the ALTO server determines, from the second information, the APN information synchronized for the ALTO client.

In another possible implementation, the ALTO server may further allocate, to the ALTO client, a correspondence between the APN information of the first network and the one or more network services provided in the first network. For example, the second information includes the correspondence between the APN information of the first network and the one or more network services provided in the first network. For ease of description, the correspondence between the APN information of the first network and the one or more network services provided in the first network is referred to as a first correspondence in this embodiment of this application. The ALTO server obtains the first correspondence (that is, the ALTO server obtains some or all of the first correspondences from the second information), and then, the ALTO server uses the first correspondence as the first information.

Further, the ALTO server may perform step 601 in response to a request of the ALTO client. For example, if the ALTO client needs to allocate a network service to the first device, the ALTO client sends a request to the ALTO server. The ALTO server obtains the first information in response to the request.

Alternatively, the ALTO server may perform step 601 in response to a request of the first device in the first network. For example, if the first device in the first network needs to use a network service, the first device sends a request to the ALTO server. The ALTO server obtains the first information in response to the request.

602: The ALTO server sends the first information to the ALTO client according to the ALTO protocol, where the first information indicates the one or more network services available in the first network.

In step 602, the ALTO server sends the first information to the ALTO client according to the ALTO protocol, where the first information indicates the one or more network services available in the first network. The first network is a network that is currently managed or covered by the ALTO server. Devices in the first network, such as a terminal device, CPE, a network device, an application server, an SD-WAN controller, or another device, are collectively referred to as the first device.

The network service in embodiments of this application includes but is not limited to a path service, a service function chain service, a network slicing service, a computing capability service, or the like. For example, a type of any one of the one or more network services includes a segment routing SR path service, a traffic engineering TE tunnel path service, a security service, a network slicing service, or a computing capability service.

In a possible implementation, the ALTO server provides one or more northbound interfaces (northbound interfaces, NBI) to implement that the ALTO server sends the first information to the ALTO client according to the ALTO protocol.

603: The ALTO client sends the first information to the first device.

In step 603, the ALTO client may send the first information from the ALTO server to the first device. Descriptions are separately provided for different scenarios. When the ALTO client is integrated with the SD-WAN controller or the ALTO client is integrated with the application server, the ALTO client is used as a functional module inside the SD-WAN controller (or the application server), the SD-WAN controller is used as the first device associated with the ALTO, and the ALTO client sends the first information to the SD-WAN controller.

When the ALTO client is independent of the SD-WAN controller or the ALTO client is independent of the application server, the SD-WAN controller is used as the first device associated with the ALTO, the ALTO client sends the first information to the SD-WAN controller, and the SD-WAN controller (or the application server) obtains the first information from the ALTO client.

In a possible implementation, after the SD-WAN controller (or the application server) obtains the first information through the ALTO client, one CPE managed by the SD-WAN controller is used as the first device, and the SD-WAN controller sends the first information to the first device. For example, the SD-WAN controller sends the first information to the CPE in the first network; and the application server sends the first information to the terminal device in the first network.

Alternatively, the ALTO client determines, based on the first information from the ALTO server, the one or more network services corresponding to the first information from the ALTO server. Then, the ALTO client determines the target network service based on the one or more network services. Then, the ALTO client determines, based on the target network service, the first information corresponding to the target network service. The ALTO client sends, to the first device, the first information corresponding to the target network service.

604: The first device determines the target network service based on the first information.

In step 604, after the first device obtains the first information, the first device determines the target network service based on the first information. Then, the first device enters the target network service (or the first device uses the target network service).

In a possible implementation, the application server (or the SD-WAN controller) is used as the first device, and after obtaining the first information sent by the ALTO client, the application server (or the SD-WAN controller) determines the target network service based on the first information. In other words, the application server (or the SD-WAN controller) is used as the first device. The first device determines the target network service based on the first information.

In another possible implementation, after the SD-WAN controller (or the application server) obtains the first information through the ALTO client, one CPE managed by the SD-WAN controller is used as the first device, and the SD-WAN controller sends the first information to the first device. For example, the SD-WAN controller sends the first information to the CPE in the first network; and the application server sends the first information to the terminal device in the first network. Then, the first device determines the target network service based on the first information.

Alternatively, the first device determines identification information of the target network service (or APN information corresponding to the target network service), and the first device adds the identification information of the target network service (or the APN information corresponding to the target network service) to a target service packet, where the target service packet is related to an application (or a service) that uses the target network service.

Alternatively, the first information includes a correspondence between the one or more network services and the APN information related to at least one network service in the one or more network services, and the first device determines the target network service based on the correspondence between the one or more network services and the APN information related to the at least one network service in the one or more network services. Specifically, when the first information corresponds to the one or more network services, the first device determines the one or more network services based on the first information. Then, the first device determines the target network service based on the one or more network services. For example, when the first information includes the first correspondence, the first device determines the one or more network services based on the first correspondence, and then selects the target network service. The first device determines, based on the first correspondence, APN information corresponding to the target network service. In this way, the first device can actively select and determine the target network service. This improves implementation flexibility.

Alternatively, the first information includes APN information, and the first correspondence is preconfigured in the first device. The first device determines the target network service based on the first information (APN information) and the first correspondence.

For example, when the first information is the APN information, the first device determines, based on the APN information and the first correspondence (the first correspondence may be preconfigured in the first device), a network service corresponding to the APN information. Then, the first device encapsulates the APN information (for example, APN ID information) into a packet header of a target service packet, to indicate the target service packet to obtain, in the first network, the network service corresponding to the APN information. For example, the target service packet is mapped to a TE path or a network slice corresponding to the network service. In the foregoing method, the network service is automatically matched based on the APN information.

For another example, when the first information is a BSID, the first device determines, based on the BSID, that the corresponding network service is the target network service. Then, the first device encapsulates the BSID (identification information of the network service) into a packet header of a target service packet. The packet header of the target service packet may be an Internet Protocol version 6 (Internet Protocol version 6, IPv6) packet header of the target service packet. A specific location at which the BSID information is encapsulated may be a hop-by-hop options header, a segment routing header, or the like of the IPv6 packet header. This is not limited in embodiments of this application.

It should be noted that the first information may alternatively be encapsulated into another location of the target service packet. This is not limited in embodiments of this application.

For example, after receiving the target service packet, a device in the first network executes, based on the identification information of the network service (the identification information of the target network service) carried in the target service packet, a policy corresponding to the target network service. The policy includes but is not limited to one or more of the following: entering a path (for example, an SR path or a TE path) corresponding to the target network service, driving in-situ flow information telemetry (in-situ flow information telemetry, iFIT) performance detection, entering a security service function chain (also referred to as a security pool service) corresponding to the target network service, or entering the edge computing service.

In embodiments of this application, a network service allocation (or network service exposure) interface is provided according to the ALTO protocol. This improves efficiency of system interconnection between an operator and a service provider, reduces difficulty of network service rollout, and improves timeliness of network service rollout.

With reference to the foregoing embodiments, the following describes how to determine the target network service with reference to the accompanying drawings.

For example, FIG. 7 is a schematic flowchart of determining a target network service according to an embodiment of this application. Details are as follows.

S1: An ALTO server sends a first message to an ALTO client, where the first message indicates one or more network services available in a first network. For example, the first message includes identification information of a plurality of network services, and the plurality of network services belong to the network services available in the first network.

S2: The ALTO client sends a second message to the ALTO server, where the second message indicates a target network service. Specifically, after receiving the first message, the ALTO client determines the one or more network services available in the first network. Then, the ALTO client selects one or more network services, as the target network service, from the one or more network services available in the first network. Then, the ALTO client sends the second message to the ALTO server. For example, the second message includes identification information of the target network service.

After step S2, the ALTO server determines, based on the target network service, first information corresponding to the target network service. The ALTO server sends, according to an ALTO protocol to the ALTO client, the first information corresponding to the target network service.

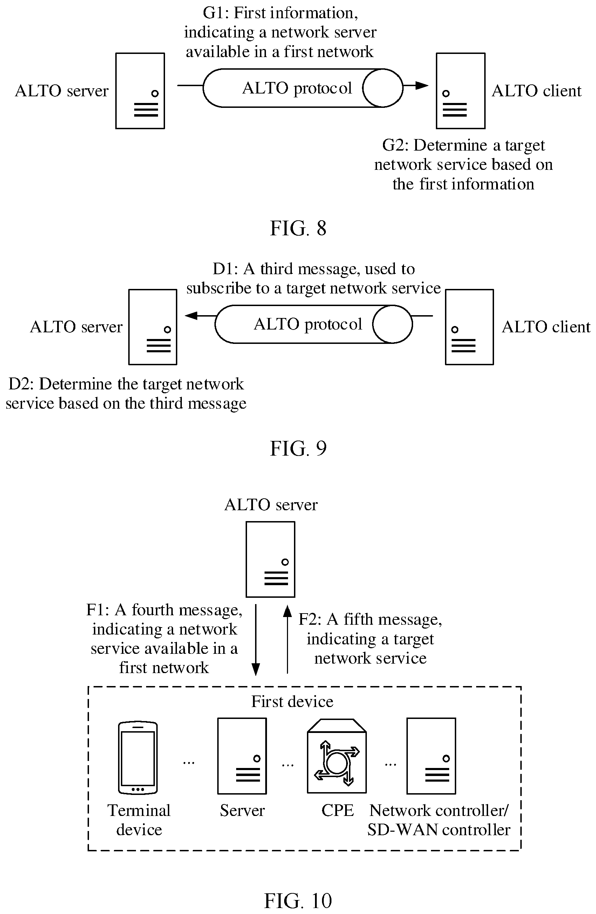

For another example, FIG. 8 is another schematic flowchart of determining a target network service according to an embodiment of this application. Details are as follows.

G1: An ALTO server sends first information to an ALTO client.

G2: The ALTO client determines a target network service based on the first information from the ALTO server. Then, the ALTO client determines information corresponding to the target network service. For subsequent steps, refer to step 603 and step 604 in the foregoing embodiment.

For another example, FIG. 9 is another schematic flowchart of determining a target network service according to an embodiment of this application. Details are as follows.

D1: An ALTO client sends a third message to an ALTO server, where the third message is used to subscribe to a target network service.

For example, the ALTO client sends the third message to the ALTO server based on a request of an application server (or an SD-WAN controller, or another first device in a first network). The third message may carry expected information of the target network service. For example, the expected information includes expecting that the obtained target network service belongs to a security service function chain, or that the obtained target network service belongs to network slicing, and a bandwidth of a network slice is greater than 100 mbps, or that the obtained target network service is a storage service, and an available storage resource of the storage service is greater than 500 Gbytes.

For another example, the third message carries identification information of a network service to which needs to be subscribed.

D2: The ALTO server determines the target network service based on the third message.

Specifically, the ALTO server determines, based on the third message, the target network service from one or more network services available in a first network.

For example, when the third message carries expected information of the target network service, a network service that matches the third message is determined as the target network service.

For another example, when the third message carries identification information of a network service to which needs to be subscribed, and one or more network services available in a first network include the target network service, the ALTO server determines, based on the third message, the target network service from the one or more network services available in the first network. For subsequent steps, refer to step 603 and step 604 in the foregoing embodiment.

For another example, FIG. 10 is another schematic flowchart of determining a target network service according to an embodiment of this application. Details are as follows.

F1: An ALTO server sends a fourth message to a first device, where the fourth message indicates a network service available in a first network.

For example, the fourth message includes identification information of a plurality of network services, and the plurality of network services belong to network services available in the first network.

F2: The first device sends a fifth message to the ALTO server, where the fifth message indicates a target network service.

Specifically, after receiving the fourth message, the first device determines one or more network services available in the first network. Then, the first device selects one or more network services, as the target network service, from the one or more network services available in the first network. Then, the first device sends the fifth message to the ALTO server. For example, the fifth message includes identification information of the target network service.

After step F2, the ALTO server determines, based on the target network service, first information corresponding to the target network service. The ALTO server sends, according to an ALTO protocol to an ALTO client, the first information corresponding to the target network service.

The following describes some application scenarios in this application with reference to the foregoing embodiments.

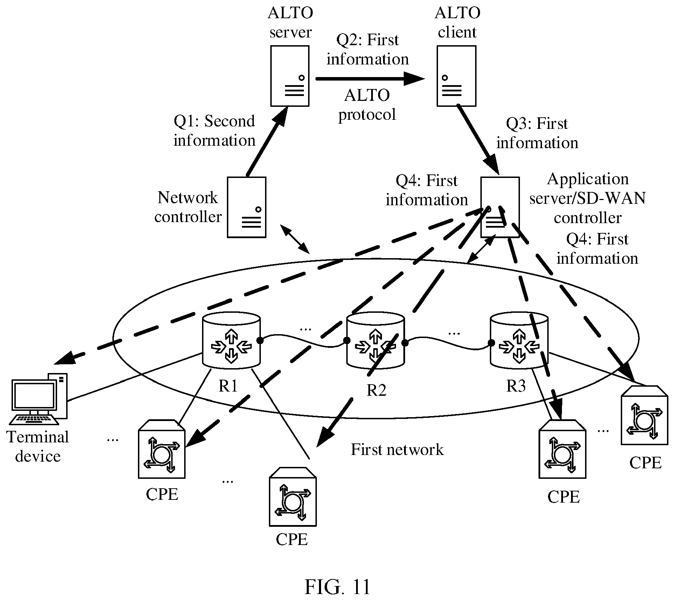

FIG. 11 is a diagram of an application scenario according to an embodiment of this application.

Q1: A network controller obtains second information from a first network, and sends the second information to an ALTO server.

Q2: The ALTO server determines first information based on the second information, and then sends the first information to an ALTO client according to an ALTO protocol.

Q3: The ALTO client sends the first information to an application server or an SD-WAN controller.

Q4: The application server determines a target network service based on the first information, and then uses the target network service. Alternatively, the SD-WAN controller sends the first information to a first device in the first network. In this way, the first device determines the target network service based on the first information.

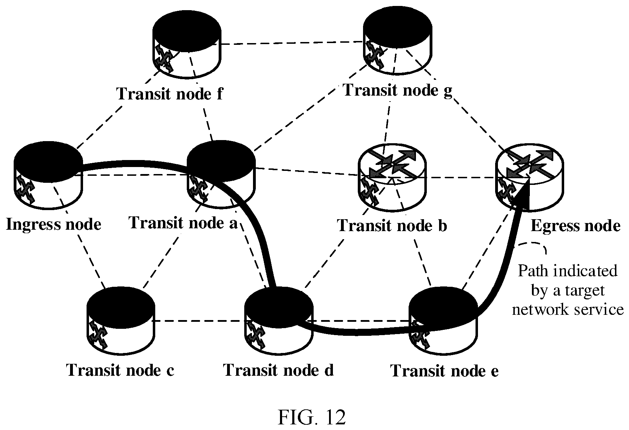

FIG. 12 is a diagram of an application scenario according to an embodiment of this application. A target network service corresponding to the application scenario is a path service. A path indicated by the target network service is: an ingress node-a transit node a-a transit node d-a transit node e-an egress node.

First, an ALTO server determines, by using a network controller, one or more network services available in a first network. Then, the ALTO server allocates the target network service to an application A based on the one or more network services available in the first network.

Then, the ALTO server determines first information corresponding to the target network service. The ALTO server sends, according to an ALTO protocol to an ALTO client, the first information corresponding to the target network service.

Then, an application server obtains, through the ALTO client, the first information corresponding to the target network service. The application server encapsulates identification information of the target network service into a related packet of the application A. After the application A uses the target network service, the related packet of the application A carries the identification information of the target network service. After entering a network shown in FIG. 12, the related packet of the application A is forwarded along the path indicated by the target network service.

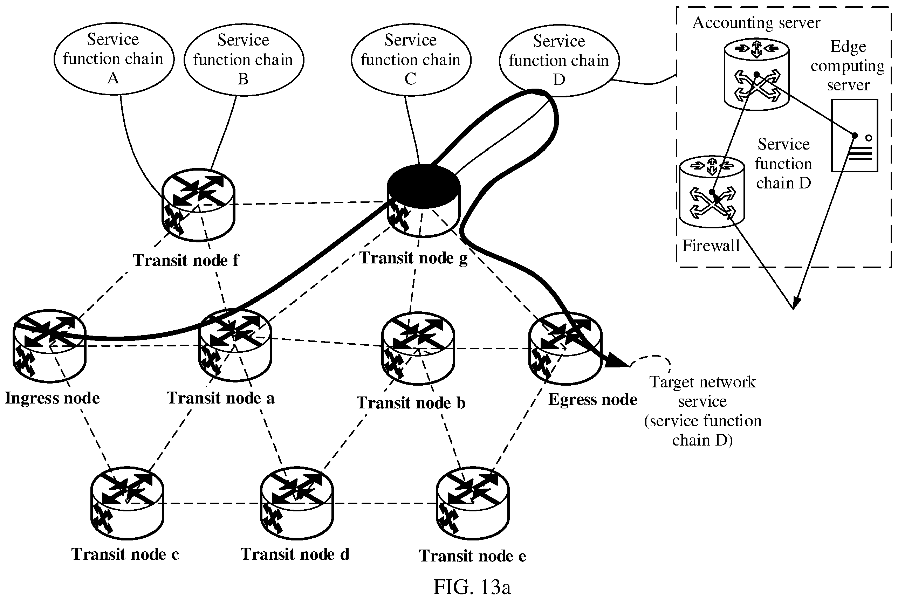

FIG. 13a is a diagram of an application scenario according to an embodiment of this application. A target network service corresponding to the application scenario is a service function chain service.

First, an ALTO server determines, by using a network controller, one or more network services available in a first network. Then, the ALTO server allocates the target network service to an application B based on the one or more network services available in the first network.

Then, the ALTO server determines first information corresponding to the target network service. The ALTO server sends, according to an ALTO protocol to an ALTO client, the first information corresponding to the target network service.

Then, an application server obtains, through the ALTO client, the first information corresponding to the target network service. The application server encapsulates identification information of the target network service into a related packet of the application B. After the application B uses the target network service, the related packet of the application B carries the identification information of the target network service. After the related packet of the application B enters a network shown in FIG. 13a, the packet is forwarded along a path indicated by the target network service, and enters a service function chain D at a transit node g. Then, related processing of the service function chain D is performed. For example, filtering is first performed by using a firewall, then charging processing is completed on an accounting server, and finally edge computing processing is performed on an edge computing server. After the foregoing processing is completed, the related packet (including a processing result of the edge computing server) of the application B is forwarded to an egress node through the transit node g.

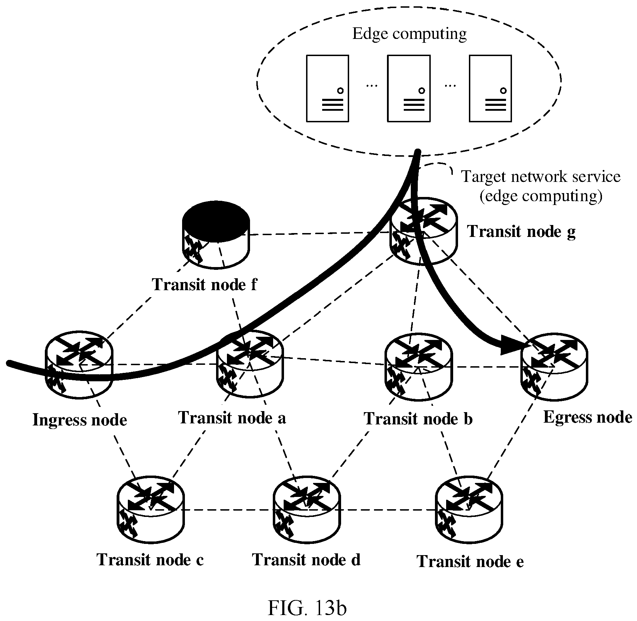

FIG. 13b is a diagram of an application scenario according to an embodiment of this application. A target network service corresponding to the application scenario is an edge computing service.

First, an ALTO server determines, by using a network controller, one or more network services available in a first network. Then, the ALTO server allocates the target network service to an application C based on the one or more network services available in the first network.

Then, the ALTO server determines first information corresponding to the target network service. The ALTO server sends, according to an ALTO protocol to an ALTO client, the first information corresponding to the target network service.

Then, an application server obtains, through the ALTO client, the first information corresponding to the target network service. The application server encapsulates identification information of the target network service into a related packet of the application C. After the application C uses the target network service, the related packet of the application C carries the identification information of the target network service. After the related packet of the application C enters a network shown in FIG. 13b, the packet is forwarded along a path indicated by the target network service, and enters an edge computing device cluster at a transit node g. Then, related processing of edge computing is performed. For example, the related packet of the application C carries a video source file, and after the edge computing device cluster is entered at the transit node g, an "H.265-HEVC" algorithm is used to perform video encoding. After the foregoing processing is completed, the related packet (including a processing result of edge computing, for example, a file on which video encoding is performed) of the application C is forwarded to an egress node through the transit node g.

The foregoing mainly describes the solutions provided in embodiments of this application from a perspective of methods. It may be understood that, to implement the foregoing functions, a communication apparatus includes corresponding hardware structures and/or software modules for performing the functions. A person of ordinary skill in the art should easily be aware that, in combination with modules, algorithms and steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

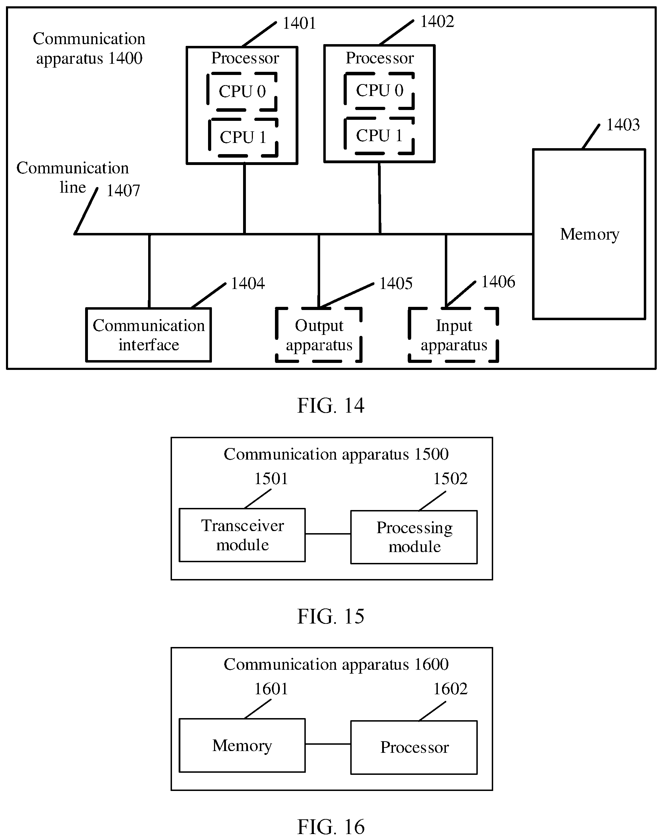

FIG. 14 is a diagram of a hardware structure of a communication apparatus according to an embodiment of this application. As shown in FIG. 14, the communication apparatus may include the following content.

The communication apparatus includes at least one processor 1401, a communication line 1407, a memory 1403, and at least one communication interface 1404.

The processor 1401 may be a general-purpose central processing unit (central processing unit, CPU), a microprocessor, an application-specific integrated circuit (application-specific integrated circuit, server side IC), or one or more integrated circuits configured to control program execution in the solutions of this application.

The communication line 1407 may include a path for information transmission between the foregoing components.

The communication interface 1404 is configured to communicate, by using any transceiver-type apparatus, with another apparatus or a communication network, for example, the Ethernet.

The memory 1403 may be a read-only memory (read-only memory, ROM), another type of static storage apparatus that can store static information and instructions, a random access memory (random access memory, RAM), or another type of dynamic storage apparatus that can store information and instructions. The memory may exist independently, and is connected to the processor through the communication line 1407. The memory may alternatively be integrated with the processor.

The memory 1403 is configured to store computer-executable instructions for executing the solutions of this application, and the processor 1401 controls execution. The processor 1401 is configured to execute the computer-executable instructions stored in the memory 1403, to implement the application layer traffic optimization ALTO protocol-based communication method provided in the foregoing embodiments of this application.

Optionally, the computer-executable instructions in embodiments of this application may also be referred to as application code. This is not specifically limited in embodiments of this application.

In a specific implementation, in an embodiment, the communication apparatus may include a plurality of processors, such as the processor 1401 and a processor 1402 in FIG. 14. Each of the processors may be a single-core (single-CPU) processor, or may be a multi-core (multi-CPU) processor. The processor herein may be one or more apparatuses, circuits, and/or processing cores configured to process data (such as computer program instructions).

In a specific implementation, in an embodiment, the communication apparatus may further include an output apparatus 1405 and an input apparatus 1406. The output apparatus 1405 communicates with the processor 1401, and may display information in a plurality of manners. The input apparatus 1406 communicates with the processor 1401, and may receive an input of a user in a plurality of manners. For example, the input apparatus 1406 may be a mouse, a touchscreen apparatus, or a sensing apparatus.

When the communication apparatus is a terminal device, in the communication apparatus, the processor 1402 may include one or more processing units. For example, the processor 1402 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the communication apparatus 1400. The controller may generate an operation control signal based on instruction operation code and a time sequence signal, to complete control of instruction reading and instruction execution.

A memory may be further disposed in the processor 1402, and is configured to store instructions and data. In some embodiments, the memory in the processor 1402 is a cache. The memory may store instructions or data just used or cyclically used by the processor 1402. If the processor 1402 needs to use the instructions or the data again, the processor 1402 may directly invoke the instructions or the data from the memory. This avoids repeated access, reduces waiting time of the processor 1402, and improves system efficiency.

In some embodiments, the processor 1402 may include one or more interfaces. The interface may include an inter-integrated circuit (inter-integrated circuit, I1C) interface, an inter-integrated circuit sound (inter-integrated circuit sound, I1S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that, an interface connection relationship between the modules shown in this embodiment of this application is merely an example for description, and does not constitute a limitation on the structure of the communication apparatus 1400. In some other embodiments of this application, the communication apparatus 1400 may alternatively use an interface connection mode different from an interface connection mode in the foregoing embodiment, or a combination of a plurality of interface connection modes.

A wireless communication function of the communication apparatus 1400 may be implemented through an antenna 1, an antenna 2, a mobile communication module, a wireless communication module, a modem processor, a baseband processor, and the like.

In some feasible implementations, the communication apparatus 1400 may communicate with another device by using the wireless communication function.

The antenna 1 and the antenna 2 are configured to: transmit and receive electromagnetic wave signals. Each antenna in the communication apparatus 1400 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module may provide a wireless communication solution that includes 1G/3G/4G/5G or the like and that is applied to the communication apparatus 1400. The mobile communication module may include at least one filter, a switch, a power amplifier, a low noise amplifier (low noise amplifier, LNA), and the like. The mobile communication module may receive an electromagnetic wave through the antenna 1, perform processing such as filtering or amplification on the received electromagnetic wave, and transmit a processed electromagnetic wave to the modem processor for demodulation. The mobile communication module may further amplify a signal modulated by the modem processor, and convert an amplified signal into an electromagnetic wave for radiation through the antenna 2. In some embodiments, at least some functional modules of the mobile communication module may be disposed in the processor 1402. In some embodiments, at least some functional modules of the mobile communication module may be disposed in a same device as at least some modules of the processor 1402.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal through an audio device (which is not limited to a speaker, a receiver, or the like), or displays an image or a video on a display. In some embodiments, the modem processor may be an independent component. In some other embodiments, the modem processor may be independent of the processor 1402, and is disposed in a same device as the mobile communication module or another functional module.

The communication apparatus 1400 may implement a display function by using the GPU, the display, the application processor, and the like. The GPU is a microprocessor for image processing, and connects the display and the application processor. The GPU is configured to: perform mathematical and geometric computation, and render an image. The processor 1402 may include one or more GPUs, which execute program instructions to generate or change display information.

An external memory interface may be used to connect to an external storage card, for example, a Micro SD card, to extend a storage capability of the communication apparatus 1400. The external storage card communicates with the processor 1402 through the external memory interface, to implement a data storage function. For example, files such as music and videos are stored in the external storage card.

An internal memory may be configured to store computer-executable program code. The executable program code includes instructions. The processor 1402 runs the instructions stored in the internal memory, to perform data processing and various function applications of the communication apparatus 1400. The internal memory may include a program storage area and a data storage area. The program storage area may store an operating system, an application required by at least one function (for example, a voice playing function or an image playing function), and the like. The data storage area may store data (for example, audio data and contacts) and the like created when the communication apparatus 1400 is used. In addition, the internal memory may include a high-speed random access memory, or may include a nonvolatile memory, for example, at least one magnetic disk storage device, a flash memory device, or a universal flash storage (universal flash storage, UFS).

The communication apparatus may be a general-purpose apparatus or a dedicated apparatus. In a specific implementation, the communication apparatus may be a desktop computer, a portable computer, a network server side, a wireless terminal apparatus, an embedded apparatus, or an apparatus having a structure similar to that in FIG. 14. A type of the communication apparatus is not limited in embodiments of this application. The communication apparatus may be a cloud server side, or may be a terminal device. This is not limited herein.

It may be understood that, the structures shown in embodiments of this application do not constitute a specific limitation on the communication apparatus 1400. In some other embodiments of this application, the communication apparatus 1400 may include more or fewer components than those shown in the figure, or a combination of a part of the components, or splits from a part of the components, or an arrangement of different components. The components shown in the figure may be implemented by hardware, software, or a combination of software and hardware.

In embodiments of this application, the communication apparatus (including a server side and a client) may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In an actual implementation, another division manner may be used.

The following describes in detail a communication apparatus in this application. FIG. 15 is a diagram of an embodiment of a communication apparatus 1500 according to an embodiment of this application.

In a possible implementation, the communication apparatus 1500 is used as an ALTO server, and the communication apparatus 1500 includes:
a transceiver module 1501, configured to send first information to an ALTO client according to an ALTO protocol, where the first information indicates one or more network services available in a first network, and the first information is used by a first device associated with the ALTO client to obtain the one or more network services.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes a correspondence between the one or more network services and APN information related to the at least one network service in the one or more network services.

In a possible implementation, a processing module 1502 is configured to determine the first information.

In a possible implementation, the transceiver module 1501 is further configured to obtain second information, where the second information includes one or more of the following information: topology information of the first network, device information of the first device in the first network, service function chain information of the first network, computing capability information of the first network, or APN information of the first network; and
the processing module 1502 is further configured to determine the first information based on the second information.

In a possible implementation,
the processing module 1502 is further configured to determine, based on the second information, the one or more network services available in the first network; and
the processing module 1502 is further configured to determine, based on the one or more network services available in the first network, the first information corresponding to the one or more network services available in the first network.

In a possible implementation,
the processing module 1502 is further configured to: determine, from the second information, APN information allocated to the ALTO client, and use the APN information as the first information.

In a possible implementation,
the transceiver module 1501 is further configured to obtain a first correspondence, where the first correspondence indicates a correspondence between the APN information of the first network and the one or more network services; and
the processing module 1502 is further configured to use the first correspondence as the first information.

In a possible implementation,
the processing module 1502 is further configured to determine a target network service based on the one or more network services available in the first network; and
the processing module 1502 is further configured to determine, based on the target network service, the first information corresponding to the target network service.

In a possible implementation,
the transceiver module 1501 is further configured to send a first message to the ALTO client, where the first message indicates the one or more network services available in the first network; and
the transceiver module 1501 is further configured to receive a second message from the ALTO client, where the second message indicates the target network service.

In a possible implementation,
the transceiver module 1501 is further configured to receive a third message from the ALTO client, where the third message is used to subscribe to the target network service; and
the processing module 1502 is further configured to determine, based on the third message, the target network service from the one or more network services available in the first network.

In a possible implementation, a type of any one of the one or more network services includes a segment routing SR path service, a traffic engineering TE tunnel path service, a security service, a network slicing service, or a computing capability service.

In a possible implementation, the communication apparatus 1500 is used as an ALTO client, and the communication apparatus 1500 includes:
a transceiver module 1501, configured to receive first information from an ALTO server according to an ALTO protocol, where the first information indicates one or more network services available in a first network, and the first information is used by a first device associated with the ALTO client to obtain the one or more network services; and
the transceiver module 1501 is further configured to send the first information to the first device.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes a correspondence between the one or more network services and APN information related to the at least one network service in the one or more network services.

In a possible implementation, when the ALTO client and the first device belong to a same device,
a processing module 1502 is configured to determine a target network service based on the first information.

In a possible implementation, the first information includes the APN information related to the at least one network service in the one or more network services, and
the processing module 1502 is further configured to determine the target network service based on the APN information related to the at least one network service in the one or more network services.

In a possible implementation, the first information includes the correspondence between the one or more network services and the APN information related to the at least one network service in the one or more network services, and
the processing module 1502 is further configured to determine the target network service based on the correspondence between the one or more network services and the APN information related to the at least one network service in the one or more network services.

In a possible implementation, a type of any one of the one or more network services includes a segment routing SR path service, a traffic engineering TE tunnel path service, a security service, a network slicing service, or a computing capability service.

In a possible implementation, the communication apparatus 1500 is used as a first device, and the communication apparatus 1500 includes:
a transceiver module 1501, configured to receive first information sent by an ALTO client, where the first information indicates one or more network services available in a first network, and the first information is used by the first device to obtain the one or more network services; and
a processing module 1502, configured to determine a target network service based on the first information.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services, and
the processing module 1502 is further configured to determine the target network service based on the APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes the correspondence between the one or more network services and the APN information related to the at least one network service in the one or more network services, and
the processing module 1502 is further configured to determine the target network service based on the correspondence between the one or more network services and the APN information related to the at least one network service in the one or more network services.

In a possible implementation, a type of any one of the one or more network services includes a segment routing SR path service, a traffic engineering TE tunnel path service, a security service, a network slicing service, or a computing capability service.

FIG. 16 is a diagram of an embodiment of a communication apparatus 1600 according to an embodiment of this application. The communication apparatus 1600 includes a memory and a processor. The memory includes instructions, and the processor is configured to perform any implementation shown in the foregoing method embodiments.

In a possible implementation, the communication apparatus 1600 is used as an ALTO server, the communication apparatus 1600 includes a memory 1601 and a processor 1602, and the memory includes instructions.

The processor is configured to perform any implementation shown in the foregoing method embodiments.

In a possible implementation, for example, the processor 1602 is configured to send first information to an ALTO client according to an ALTO protocol, where the first information indicates one or more network services available in a first network, and the first information is used by a first device associated with the ALTO client to obtain the one or more network services.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes a correspondence between the one or more network services and APN information related to the at least one network service in the one or more network services.

In a possible implementation, the processor 1602 is further configured to determine the first information.

In a possible implementation, the processor 1602 is further configured to obtain second information, where the second information includes one or more of the following information: topology information of the first network, device information of the first device in the first network, service function chain information of the first network, computing capability information of the first network, or APN information of the first network; and
the processor 1602 is further configured to determine the first information based on the second information.

In a possible implementation,
the processor 1602 is further configured to determine, based on the second information, the one or more network services available in the first network; and
the processor 1602 is further configured to determine, based on the one or more network services available in the first network, the first information corresponding to the one or more network services available in the first network.

In a possible implementation,
the processor 1602 is further configured to: determine, from the second information, APN information allocated to the ALTO client, and use the APN information as the first information.

In a possible implementation,
the processor 1602 is further configured to obtain a first correspondence, where the first correspondence indicates a correspondence between the APN information of the first network and the one or more network services; and
the processor 1602 is further configured to use the first correspondence as the first information.

In a possible implementation,
the processor 1602 is further configured to determine a target network service based on the one or more network services available in the first network; and
the processor 1602 is further configured to determine, based on the target network service, the first information corresponding to the target network service.

In a possible implementation,
the processor 1602 is further configured to send a first message to the ALTO client, where the first message indicates the one or more network services available in the first network; and
the processor 1602 is further configured to receive a second message from the ALTO client, where the second message indicates the target network service.

In a possible implementation,
the processor 1602 is further configured to receive a third message from the ALTO client, where the third message is used to subscribe to the target network service; and
the processor 1602 is further configured to determine, based on the third message, the target network service from the one or more network services available in the first network.

In a possible implementation, a type of any one of the one or more network services includes a segment routing SR path service, a traffic engineering TE tunnel path service, a security service, a network slicing service, or a computing capability service.

In a possible implementation, the communication apparatus 1600 is used as an ALTO client, and the communication apparatus 1600 includes:
a processor 1602, configured to receive first information from an ALTO server according to an ALTO protocol, where the first information indicates one or more network services available in a first network, and the first information is used by a first device associated with the ALTO client to obtain the one or more network services; and
the processor 1602 is further configured to send the first information to the first device.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes a correspondence between the one or more network services and APN information related to the at least one network service in the one or more network services.

In a possible implementation, when the ALTO client and the first device belong to a same device,
the processor 1602 is configured to determine a target network service based on the first information.

In a possible implementation, the first information includes the APN information related to the at least one network service in the one or more network services, and
the processor 1602 is further configured to determine the target network service based on the APN information related to the at least one network service in the one or more network services.

In a possible implementation, the first information includes the correspondence between the one or more network services and the APN information related to the at least one network service in the one or more network services, and
the processor 1602 is further configured to determine the target network service based on the correspondence between the one or more network services and the APN information related to the at least one network service in the one or more network services.

In a possible implementation, a type of any one of the one or more network services includes a segment routing SR path service, a traffic engineering TE tunnel path service, a security service, a network slicing service, or a computing capability service.

In a possible implementation, the communication apparatus 1600 is used as a first device, and the communication apparatus 1600 includes:
a processor 1602, configured to receive first information sent by an ALTO client, where the first information indicates one or more network services available in a first network, and the first information is used by the first device to obtain the one or more network services; and
the processor 1602 is configured to determine a target network service based on the first information.

In a possible implementation, the first information includes identification information of at least one network service in the one or more network services, or service capability information of at least one network service in the one or more network services.

In a possible implementation, the service capability information of the at least one network service in the one or more network services includes one or more of the following: type information of the network service, specification information of the network service, or quality of service QoS information of the network service.

In a possible implementation, the first information includes application-aware networking APN information related to the at least one network service in the one or more network services, and
the processor 1602 is further configured to determine the target network service based on the APN information related to the at least one network service in the one or more network services.

In a possible implementation, the APN information includes one or more of the following: APN identifier ID information, intent information, or APN parameter information, the APN ID information includes user group identifier information and/or application group identifier information, and the APN parameter information includes one or more of the following: network performance requirement information, security service requirement information, or network service requirement information.

In a possible implementation, the first information includes the correspondence between the one or more network services and the APN information related to the at least one network service in the one or more network services, and
the processor 1602 is further configured to determine the target network service based on the correspondence between the one or more network services and the APN information related to the at least one network service in the one or more network services.

In a possible implementation, a type of any one of the one or more network services includes a segment routing SR path service, a traffic engineering TE tunnel path service, a security service, a network slicing service, or a computing capability service.

It should be noted that the communication apparatus mentioned in embodiments of this application may be, for example, a network device like a switch or a router, may be some components of a network device, for example, a board or a line card of the network device, may be a functional module of the network device, or may be a chip configured to implement the methods in this application. This is not specifically limited in embodiments of this application. When the communication apparatus is a chip, the transceiver module configured to implement the method may be, for example, an interface circuit of the chip, and the processing module may be a processing circuit having a processing function in the chip. Communication apparatuses may be directly connected, for example, but not limited to, through an Ethernet cable or an optical cable.

In some possible embodiments, the foregoing communication apparatus (for example, an ALTO server, an ALTO client, and/or a first device) may be implemented as a virtualized device. The virtualization device may be a virtual machine (virtual machine, VM), a virtual router, or a virtual switch that runs a program for sending a packet. The virtualization device is deployed on a hardware device (for example, a physical server). For example, the ALTO server may be implemented based on a general-purpose physical server with reference to a network functions virtualization (network functions virtualization, NFV) technology.

It should be understood that the communication apparatuses in the foregoing product forms respectively have any function of the ALTO server, the ALTO client, and/or the first device in the foregoing method embodiments. Details are not described herein again.

An embodiment of this application further provides a communication apparatus. The communication apparatus includes: a communication interface; and
a processor connected to the communication interface. Based on the communication interface and the processor, the following is implemented.

In a possible implementation, the communication apparatus is used for the ALTO server, so that the communication apparatus performs the methods in embodiments shown in FIG. 6 to FIG. 13b.

In another possible implementation, the communication apparatus is used for the ALTO client, so that the communication apparatus performs the methods in embodiments shown in FIG. 6 to FIG. 13b.

In another possible implementation, the communication apparatus is used for the first device, so that the communication apparatus performs the methods in embodiments shown in FIG. 6 to FIG. 13b.

An embodiment of this application further provides a communication system. The communication system includes the ALTO client and the ALTO server in the foregoing embodiments. The communication system is configured to perform any implementation shown in the foregoing method embodiments.

An embodiment of this application further provides a communication system. The communication system includes the ALTO client, the ALTO server, and the first device in the foregoing embodiments. The communication system is configured to perform any implementation shown in the foregoing method embodiments.

An embodiment of this application further provides a computer program product. The computer program product includes computer program code. When the computer program code is run on a computer, the computer is enabled to perform any implementation described in the foregoing method embodiments.

An embodiment of this application further provides a chip system, including a memory and a processor. The memory is configured to store a computer program, and the processor is configured to invoke the computer program from the memory and run the computer program, to enable a chip to perform any implementation described in the foregoing method embodiments.

An embodiment of this application further provides a chip system, including a processor. The processor is configured to invoke and run a computer program, to enable a chip to perform any implementation described in the foregoing method embodiments.

In addition, it should be noted that the apparatus embodiments described above are merely examples. The units described as separate parts may or may not be physically separate, and parts displayed as units may or may not be physical units, that is, may be located at one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between the modules indicate that the modules have communication connections with each other, which may be specifically implemented as one or more communication buses or signal cables.

Based on the descriptions of the foregoing implementations, a person skilled in the art may clearly understand that this application may be implemented by software in combination with necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of analog circuit, digital circuit, or dedicated circuit. However, as for this application, a software program implementation is a better implementation in most cases. Based on such an understanding, the technical solutions of this application essentially or the part contributing to the conventional technology may be implemented in a form of software product. The computer software product is stored in a readable storage medium like a floppy disk, a USB flash drive, a removable hard disk drive, a ROM, a RAM, a magnetic disk, or an optical disc of a computer, and includes several instructions for instructing a computer device to perform the methods described in embodiments of this application.

All or a part of the foregoing embodiments may be implemented by using software, hardware, firmware, or any combination thereof. When software is used to implement embodiments, all or a part of embodiments may be implemented in a form of computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, network apparatus, computing device, or data center to another website, computer, network apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a data center or a network apparatus, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

It should be understood that "one embodiment" or "an embodiment" mentioned in the entire specification means that particular features, structures, or characteristics related to the embodiment are included in one or more embodiments of this application. Therefore, "in one embodiment" or "in an embodiment" appearing throughout the specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially or the part contributing to the conventional technology, or all or some of the technical solutions may be implemented in a form of software product. The computer software product is stored in a storage medium and includes several instructions for instructing a computer device (which may be a personal computer, a server, a network device, or the like) to perform all or some of the steps of the methods described in embodiments of this application.

In conclusion, the foregoing descriptions are merely examples of embodiments of the technical solutions of this application, but are not intended to limit the protection scope of this application. Any modification, or improvement made without departing from the principle of this application shall fall within the protection scope of this application, where the invention and its scope of protection is defined by the appended independent claims.

## Claims

1. An application layer traffic optimization ALTO protocol-based communication method, comprising:
sending (602), by an ALTO server, first information to an ALTO client according to an ALTO protocol, wherein the first information indicates one or more network services available in a first network, wherein the first network is a network that is currently managed or covered by the ALTO server, and the first information is used by a first device associated with the ALTO client to obtain (604) the one or more network services, and wherein the first information is sent (603) to the first device by the ALTO client; and
wherein before the sending, by an ALTO server, first information to an ALTO client according to the ALTO protocol, the method comprises:
determining (601), by the ALTO server, the first information.

2. The method according to claim 1, wherein the first information comprises identification information of at least one network service in the one or more network services, or service capability information of at least one network service in the one or more network services.

3. The method according to claim 2, wherein the service capability information of the at least one network service in the one or more network services comprises one or more of the following:
type information of the network service, specification information of the network service, or quality of service QoS information of the network service.

4. The method according to claim 1 or 2, wherein the first information comprises application-aware networking APN information related to the at least one network service in the one or more network services.

5. The method according to claim 4, wherein the APN information comprises one or more of the following: APN identifier ID information, intent information, or APN parameter information, the APN ID information comprises user group identifier information and/or application group identifier information, and the APN parameter information comprises one or more of the following:
network performance requirement information, security service requirement information, or network service requirement information.

6. The method according to claim 1 or 2, wherein the first information comprises a correspondence between the one or more network services and APN information related to the at least one network service in the one or more network services.

7. The method according to any one of claims 1 to 6, wherein the determining, by the ALTO server, the first information comprises:
obtaining, by the ALTO server, second information, wherein the second information comprises one or more of the following information: topology information of the first network, device information of the first device in the first network, service function chain information of the first network, computing capability information of the first network, or APN information of the first network; and
determining, by the ALTO server, the first information based on the second information.

8. The method according to claim 8, wherein the determining, by the ALTO server, the first information based on the second information comprises:
determining, by the ALTO server based on the second information, the one or more network services available in the first network; and
determining, by the ALTO server based on the one or more network services available in the first network, the first information corresponding to the one or more network services available in the first network.

9. The method according to claim 7, wherein the second information is the APN information of the first network, and the determining, by the ALTO server, the first information based on the second information comprises:
determining, by the ALTO server from the second information, APN information allocated to the ALTO client, and using the APN information as the first information.

10. The method according to claim 7, wherein the second information is the APN information of the first network, and the determining, by the ALTO server, the first information based on the second information comprises:
obtaining, by the ALTO server, a first correspondence, wherein the first correspondence indicates a correspondence between the APN information of the first network and the one or more network services; and
using, by the ALTO server, the first correspondence as the first information.

11. The method according to claim 8, wherein the method further comprises:
determining, by the ALTO server, a target network service based on the one or more network services available in the first network; and
determining, by the ALTO server based on the target network service, the first information corresponding to the target network service.

12. The method according to claim 11, wherein the determining, by the ALTO server, a target network service based on the one or more network services available in the first network comprises:
sending, by the ALTO server, a first message to the ALTO client, wherein the first message indicates the one or more network services available in the first network; and
receiving, by the ALTO server, a second message from the ALTO client, wherein the second message indicates the target network service.

13. The method according to claim 11, wherein the determining, by the ALTO server, a target network service based on the one or more network services available in the first network comprises:
receiving, by the ALTO server, a third message from the ALTO client, wherein the third message is used to subscribe to the target network service; and
determining, by the ALTO server based on the third message, the target network service from the one or more network services available in the first network.

14. A communication apparatus, used as an application layer traffic optimization ALTO server, wherein the communication apparatus comprises:
a memory, comprising instructions; and
a processor, wherein when the processor executes the instructions, the communication apparatus is enabled to implement the method according to any one of claims 1 to 13.

## Patentansprüche

1. ALTO-protokollbasiertes Kommunikationsverfahren zur Verkehrsoptimierung der Anwendungsschicht, Folgendes umfassend:
Senden (602), durch einen ALTO-Server, von ersten Informationen an einen ALTO-Client gemäß einem ALTO-Protokoll, wobei die ersten Informationen einen oder mehrere Netzwerkdienste angeben, die in einem ersten Netzwerk verfügbar sind, wobei das erste Netzwerk ein Netzwerk ist, das gegenwärtig von dem ALTO-Server verwaltet oder abgedeckt wird, und die ersten Informationen von einer ersten Vorrichtung verwendet werden, die dem ALTO-Client zugeordnet ist, um den einen oder die mehreren Netzwerkdienste zu erlangen (604), und wobei die ersten Informationen von dem ALTO-Client an die erste Vorrichtung gesendet werden (603); und
wobei vor dem Senden, durch einen ALTO-Server, von ersten Informationen an einen ALTO-Client gemäß dem ALTO-Protokoll das Verfahren Folgendes umfasst:
Bestimmen (601), durch den ALTO-Server, der ersten Informationen.

2. Verfahren nach Anspruch 1, wobei die ersten Informationen Identifikationsinformationen von mindestens einem Netzwerkdienst in dem einen oder den mehreren Netzwerkdiensten oder Dienstfähigkeitsinformationen von mindestens einem Netzwerkdienst in dem einen oder den mehreren Netzwerkdiensten umfassen.

3. Verfahren nach Anspruch 2, wobei die Dienstfähigkeitsinformationen des mindestens einen Netzwerkdienstes in dem einen oder den mehreren Netzwerkdiensten eines oder mehreres des Folgenden umfassen: Typinformationen des Netzwerkdienstes, Spezifikationsinformationen des Netzwerkdienstes oder Dienstgüte-QoS-Informationen des Netzwerkdienstes.

4. Verfahren nach Anspruch 1 oder 2, wobei die ersten Informationen anwendungsbewusste Netzwerk-APN-Informationen umfassen, die den mindestens einen Netzwerkdienst in dem einen oder den mehreren Netzwerkdiensten betreffen.

5. Verfahren nach Anspruch 4, wobei die APN-Informationen eines oder mehreres des Folgenden umfasst: APN-Kennungs-ID-Informationen, Absichtsinformationen oder APN-Parameterinformationen, wobei die APN-ID-Informationen Benutzergruppenkennungsinformationen und/oder Anwendungsgruppenkennungsinformationen umfassen und die APN-Parameterinformationen eines oder mehreres des Folgenden umfassen: Netzwerkleistungsanforderungsinformationen, Sicherheitsdienstanforderungsinformationen oder Netzwerkdienstanforderungsinformationen.

6. Verfahren nach Anspruch 1 oder 2, wobei die ersten Informationen eine Entsprechung zwischen dem einen oder den mehreren Netzwerkdiensten und APN-Informationen umfassen, die den mindestens einen Netzwerkdienst in dem einen oder den mehreren Netzwerkdiensten betreffen.

7. Verfahren nach einem der Ansprüche 1 bis 6, wobei das Bestimmen, durch den ALTO-Server, der ersten Informationen Folgendes umfasst:
Erlangen, durch den ALTO-Server, von zweiten Informationen, wobei die zweiten Informationen eine oder mehrere der folgenden Informationen umfassen: Topologieinformationen des ersten Netzwerks, Geräteinformationen der ersten Vorrichtung in dem ersten Netzwerk, Dienstfunktionsketteninformationen des ersten Netzwerks, Rechenfähigkeitsinformationen des ersten Netzwerks oder APN-Informationen des ersten Netzwerks; und
Bestimmen, durch den ALTO-Server, der ersten Informationen auf Grundlage der zweiten Informationen.

8. Verfahren nach Anspruch 8, wobei das Bestimmen, durch den ALTO-Server, der ersten Informationen auf Grundlage der zweiten Informationen Folgendes umfasst:
Bestimmen, durch den ALTO-Server auf Grundlage der zweiten Informationen, des einen oder der mehreren Netzwerkdienste, die in dem ersten Netzwerk verfügbar sind; und
Bestimmen, durch den ALTO-Server auf Grundlage des einen oder der mehreren Netzwerkdienste, die in dem ersten Netzwerk verfügbar sind, der ersten Informationen, die dem einen oder den mehreren Netzwerkdiensten entsprechen, die in dem ersten Netzwerk verfügbar sind.

9. Verfahren nach Anspruch 7, wobei die zweiten Informationen die APN-Informationen des ersten Netzwerks sind und das Bestimmen, durch den ALTO-Server, der ersten Informationen auf Grundlage der zweiten Informationen Folgendes umfasst:
Bestimmen, durch den ALTO-Server aus den zweiten Informationen, von APN-Informationen, die dem ALTO-Client zugewiesen sind, und Verwenden der APN-Informationen als die ersten Informationen.

10. Verfahren nach Anspruch 7, wobei die zweiten Informationen die APN-Informationen des ersten Netzwerks sind und das Bestimmen, durch den ALTO-Server, der ersten Informationen auf Grundlage der zweiten Informationen Folgendes umfasst:
Erlangen, durch den ALTO-Server, einer ersten Entsprechung, wobei die erste Entsprechung eine Entsprechung zwischen den APN-Informationen des ersten Netzwerks und dem einen oder den mehreren Netzwerkdiensten angibt; und
Verwenden, durch den ALTO-Server, der ersten Entsprechung als die ersten Informationen.

11. Verfahren nach Anspruch 8, wobei das Verfahren weiterhin Folgendes umfasst:
Bestimmen, durch den ALTO-Server, eines Zielnetzwerkdienstes auf Grundlage des einen oder der mehreren Netzwerkdienste, die in dem ersten Netzwerk verfügbar sind; und
Bestimmen, durch den ALTO-Server auf Grundlage des Zielnetzwerkdienstes, der ersten Informationen, die dem Zielnetzwerkdienst entsprechen.

12. Verfahren nach Anspruch 11, wobei das Bestimmen, durch den ALTO-Server, eines Zielnetzwerkdienstes auf Grundlage des einen oder der mehreren Netzwerkdienste, die in dem ersten Netzwerk verfügbar sind, Folgendes umfasst:
Senden, durch den ALTO-Server, einer ersten Nachricht an den ALTO-Client, wobei die erste Nachricht den einen oder die mehreren Netzwerkdienste angibt, die in dem ersten Netzwerk verfügbar sind; und
Empfangen, durch den ALTO-Server, einer zweiten Nachricht von dem ALTO-Client, wobei die zweite Nachricht den Zielnetzwerkdienst angibt.

13. Verfahren nach Anspruch 11, wobei das Bestimmen, durch den ALTO-Server, eines Zielnetzwerkdienstes auf Grundlage des einen oder der mehreren Netzwerkdienste, die in dem ersten Netzwerk verfügbar sind, Folgendes umfasst:
Empfangen, durch den ALTO-Server, einer dritten Nachricht von dem ALTO-Client, wobei die dritte Nachricht verwendet wird, um an dem Zielnetzwerkdienst teilzunehmen; und
Bestimmen, durch den ALTO-Server auf Grundlage der dritten Nachricht, des Zielnetzwerkdienstes aus dem einen oder den mehreren Netzwerkdiensten, die in dem ersten Netzwerk verfügbar sind.

14. Kommunikationsvorrichtung, die als ein ALTO-Server zur Verkehrsoptimierung der Anwendungsschicht verwendet wird, wobei die Kommunikationsvorrichtung Folgendes umfasst:
einen Speicher, der Befehle umfasst; und
einen Prozessor, wobei, wenn der Prozessor die Befehle ausführt, der Kommunikationsvorrichtung ermöglicht wird, das Verfahren nach einem der Ansprüche 1 bis 13 zu implementieren.

## Revendications

1. Procédé de communication basé sur un protocole d'optimisation de trafic de couche d'application, ALTO, comprenant :
l'envoi (602), par un serveur ALTO, de premières informations à un client ALTO selon un protocole ALTO, dans lequel les premières informations indiquent un ou plusieurs services de réseau disponibles dans un premier réseau, dans lequel le premier réseau est un réseau qui est actuellement géré et couvert par le serveur ALTO, et les premières informations sont utilisées par un premier dispositif associé au client ALTO pour obtenir (604) le ou les services de réseau, et dans lequel les premières informations sont envoyées (603) au premier dispositif par le client ALTO ; et
dans lequel avant l'envoi, par un serveur ALTO, des premières informations à un client ALTO selon le protocole ALTO, le procédé comprend :
la détermination (601), par le serveur ALTO, des premières informations.

2. Procédé selon la revendication 1, dans lequel les premières informations comprennent des informations d'identification d'au moins un service de réseau dans le ou les services de réseau, ou des informations de capacité de service d'au moins un service de réseau dans le ou les services de réseau.

3. Procédé selon la revendication 2, dans lequel les informations de capacité de service de l'au moins un service de réseau dans le ou les services de réseau comprennent un ou plusieurs éléments parmi ce qui suit : des informations de type du service de réseau, des informations de spécification du service de réseau ou des informations de qualité de service QoS du service de réseau.

4. Procédé selon la revendication 1 ou 2, dans lequel les premières informations comprennent des informations de mise en réseau sensibles à l'application, APN, liées à l'au moins un service de réseau dans le ou les services de réseau.

5. Procédé selon la revendication 4, dans lequel les informations d'APN comprennent un ou plusieurs éléments parmi ce qui suit : des informations d'identifiant ID d'APN, des informations d'intention ou des informations de paramètre d'APN, les informations d'ID d'APN comprenant des informations d'identifiant de groupe d'utilisateurs et/ou des informations d'identifiant de groupe d'applications, et les informations de paramètre d'APN comprenant un ou plusieurs éléments parmi ce qui suit : des informations d'exigence de performance de réseau, des informations d'exigence de service de sécurité ou des informations d'exigence de service de réseau.

6. Procédé selon la revendication 1 ou 2, dans lequel les premières informations comprennent une correspondance entre le ou les services de réseau et des informations d'APN liées à l'au moins un service de réseau dans le ou les services de réseau.

7. Procédé selon l'une quelconque des revendications 1 à 6, dans lequel la détermination, par le serveur ALTO, des premières informations comprend :
l'obtention, par le serveur ALTO, de secondes informations, les secondes informations comprenant une ou plusieurs des informations suivantes : des informations de topologie du premier réseau, des informations de dispositif du premier dispositif dans le premier réseau, des informations de chaîne de fonction de service du premier réseau, des informations de capacité de calcul du premier réseau ou des informations d'APN du premier réseau ; et
la détermination, par le serveur ALTO, des premières informations sur la base des secondes informations.

8. Procédé selon la revendication 8, dans lequel la détermination, par le serveur ALTO, des premières informations sur la base des secondes informations comprend :
la détermination, par le serveur ALTO sur la base des secondes informations, du ou des services de réseau disponibles dans le premier réseau ; et
la détermination, par le serveur ALTO sur la base du ou des services de réseau disponibles dans le premier réseau, des premières informations correspondant au ou aux services de réseau disponibles dans le premier réseau.

9. Procédé selon la revendication 7, dans lequel les secondes informations sont les informations d'APN du premier réseau, et la détermination, par le serveur ALTO, des premières informations sur la base des secondes informations comprend :
la détermination, par le serveur ALTO à partir des secondes informations, des informations d'APN attribuées au client ALTO et l'utilisation des informations d'APN en tant que premières informations.

10. Procédé selon la revendication 7, dans lequel les secondes informations sont les informations d'APN du premier réseau et la détermination, par le serveur ALTO, des premières informations sur la base des secondes informations comprend :
l'obtention, par le serveur ALTO, d'une première correspondance, dans lequel la première correspondance indique une correspondance entre les informations d'APN du premier réseau et le ou les services de réseau ; et
l'utilisation, par le serveur ALTO, de la première correspondance en tant que premières informations.

11. Procédé selon la revendication 8, dans lequel le procédé comprend en outre :
la détermination, par le serveur ALTO, d'un service de réseau cible sur la base du ou des services de réseau disponibles dans le premier réseau ; et
la détermination, par le serveur ALTO sur la base du service de réseau cible, des premières informations correspondant au service de réseau cible.

12. Procédé selon la revendication 11, dans lequel la détermination, par le serveur ALTO, d'un service de réseau cible sur la base du ou des services de réseau disponibles dans le premier réseau comprend :
l'envoi, par le serveur ALTO, d'un premier message au client ALTO, le premier message indiquant le ou les services de réseau disponibles dans le premier réseau ; et
la réception, par le serveur ALTO, d'un deuxième message provenant du client ALTO, le deuxième message indiquant le service de réseau cible.

13. Procédé selon la revendication 11, dans lequel la détermination, par le serveur ALTO, d'un service de réseau cible sur la base du ou des services de réseau disponibles dans le premier réseau comprend :
la réception, par le serveur ALTO, d'un troisième message provenant du client ALTO, le troisième message étant utilisé pour souscrire au service de réseau cible ; et
la détermination, par le serveur ALTO sur la base du troisième message, du service de réseau cible à partir du ou des services de réseau disponibles dans le premier réseau.

14. Appareil de communication, utilisé en tant que serveur d'optimisation de trafic de couche d'application, ALTO, l'appareil de communication comprenant :
une mémoire, comprenant des instructions ; et
un processeur, dans lequel lorsque le processeur exécute les instructions, l'appareil de communication est autorisé à mettre en œuvre le procédé selon l'une quelconque des revendications 1 à 13.
